# EUROPEAN PATENT SPECIFICATION

(11) **EP 1 731 574 B1**
(45) Date of publication and mention of the grant of the patent: **09.04.2014**
(21) Application number: 05721092.4
(22) Date of filing: 18.03.2005
(51) Int. Cl.: C08L 101/10, C08K 5/09, C08K 5/17, C08K 9/04

(54) **SINGLE-COMPONENT CURABLE COMPOSITION**
EINKOMPONENTIGE HÄRTBARE ZUSAMMENSETZUNG
COMPOSITION VULCANISABLE À SIMPLE COMPOSANT

(30) Priority: 01.04.2004 JP 2004109024
(43) Date of publication of application: 13.12.2006
(73) Proprietor: KANEKA CORPORATION, Osaka (JP)
(72) Inventor: WAKABAYASHI, Katsuyu, c/o Kaneka Corp. Takasago, Takasago-shi, Hyogo 6768688 (JP); OKAMOTO, Toshihiko, c/o Kaneka Corp. Takasago, Takasago-shi, Hyogo 6768688 (JP); KUSAKABE, Masato, c/o Kaneka Corp. Osaka Plant, Settsu-shi, Osaka 5660072 (JP)
(74) Representative: Hart-Davis, Jason
(86) International application number: PCT/JP2005/004905
(87) International publication number: WO 2005/097908

(56) References cited:
- EP-A1- 1 550 700
- EP-A1- 1 550 701
- EP-A1- 1 624 027
- EP-A2- 0 839 872
- JP-A- 2003 206 410
- JP-A- 2004 059 870

## Description

### TECHNICAL FIELD

The present invention relates to a one package curable composition which comprises an organic polymer having a silicon-containing group (hereinafter referred also to as "a reactive silicon group" in some cases) which has a hydroxyl group or a hydrolysable group bonded to a silicon atom and is crosslinkable by forming a siloxane bond.

### BACKGROUND ART

It has been known that an organic polymer having at least one reactive silicon group in one molecule has a very interesting property of giving a rubber-like cured product through crosslinking by forming a siloxane bond accompanied with hydrolysis of a reactive silicon group due to moisture etc. even at a room temperature.

With respect to the reactive silicon group-containing organic polymer, a polyoxyalkylene polymer and a polyisobutylene polymer are disclosed in Japanese Kokai Publication Sho-52-73998, Japanese Kokai Publication Sho-63-6041 and have already been produced industrially and used widely for uses as a sealant, an adhesive, paint.

A curable composition and a rubber-like cured product obtained by curing the composition to be used for a sealant, an adhesive and paint etc. are required to have various properties such as curability, adhesiveness, and mechanical properties and various investigations have been made so far.

A curable composition comprising an organic polymer having a reactive silicon group is cured using a silanol condensation catalyst and generally an organotin catalyst having a carbon-tin bond, such as dibutyltin bis(acetylacetonate), is widely used. However, recently, the toxicity of the organotin compound is pointed out and there is also a problem that if the organotin catalyst is used, the restorability of the curable composition is inferior.

As described in Japanese Kokai Publication Sho-55-9669, Japanese Patent No. 3062626, Japanese Kokai Publication Hei-6-322251, Japanese Kokai Publication 2000-345054, and Japanese Kokai Publication 2003-206410, tin carboxylates and carboxylic acid salts of other metals are also used as a silanol condensation catalyst. In the case of using the metal carboxylates, cured products with improved restorability can be obtained. Further, Japanese Kokai Publication Hei-5-117519 discloses a catalyst system using a carboxylic acid and an amine compound in combination.

On the other hand, a curable composition to be used for a sealant, an adhesive, and paint and a rubber-like cured product obtained by curing the composition is required to have various characteristics such as curability, adhesiveness, mechanical properties. Further, various investigations on polyoxyalkylene polymer having a reactive silicon group have been made and many techniques of improving adhesiveness thereof by using ground calcium carbonate with a specified particle diameter are disclosed (see Japanese Kokai Publication Hei-10-316811).

However, inventors of the present invention have found a problem that if an organotin-free catalyst like tin octylate practically described in Japanese Kokai Publication Hei-10-316811 is used for a one package curable composition required to have self adhesiveness, no sufficient adhesiveness can be obtained.

On the other hand, Japanese Kokai Publication 2002-285018 discloses that the surface curability can be improved by limiting carbon atom at α-position of a carboxylic acid having an acid radical of tin carboxylate to be quaternary carbon.

Each of EP 1624027 A1, EP 1550701 A1 and EP 1550700 A1 is a state of the art under Art. 54 (3) EPC and shows a one package curable composition which comprises an organic polymer having a silicon-containing group capable of crosslinking by forming a siloxane bond and (b1) a carboxylic acid and/or (b2) a metal carboxylate. EP 0839872 A2 shows such a one package curable composition which further has a surface-treated ground calcium carbonate.

### SUMMARY OF THE INVENTION

The invention has its object to provide a one package curable composition comprising an organic polymer having a reactive silicon group as a main component, which contains an organotin-free catalyst and therefore has good curability and adhesiveness.

Inventors of the invention have made intensive investigations to solve the above-mentioned problems and have found that the one package curable composition having good curability and adhesiveness can be obtained by using a metal carboxylate and/or a carboxylic acid with a specified structure as a silanol condensation catalyst (B) for the polymer and further adding a surface-treated ground calcium carbonate as a filler, and consequently have accomplished the invention.

That is, the invention relates to
a one package curable composition
which comprises
(A) an organic polymer having a silicon-containing group capable of crosslinking by forming a siloxane bond,
(B) (b1) a carboxylic acid, whose carbon atom adjacent to a carbonyl group is a quaternary carbon, and/or (b2) a metal carboxylate, whose carbon atom adjacent to a carbonyl group is a quaternary carbon, and
(C) a surface-treated ground calcium carbonate.

A preferable embodiment of the invention is
the one package curable composition as described above
wherein the organic polymer of the component (A) has a number average molecular weight in a range from 500 to 50,000 and contains, on average, at least one or more silicon-containing group represented by the general formula (1) at a terminus of a main chain and/or a side chain per one molecule: 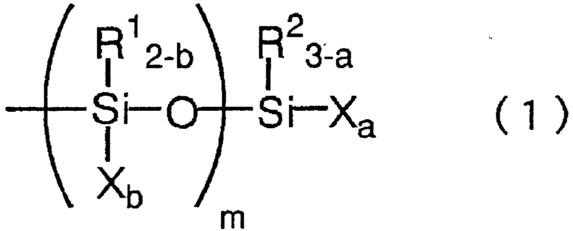 (wherein R¹ and R² independently denote an alkyl group having 1 to 20 carbon atoms, an aryl group having 6 to 20 carbon atoms, an aralkyl group having 7 to 20 carbon atoms, or a triorganosiloxy group defined as (R')₃SiO- (respective substituents R' are independently a substituted or unsubstituted hydrocarbon group having 1 to 20 carbon atoms); respective substituents X independently denote a hydroxyl or hydrolysable group; (a) denotes 0, 1, 2, or 3 and (b) denotes 0, 1, or 2 except the case both (a) and (b) are 0; and (m) denotes 0 or an integer of 1 to 19).

Another preferable embodiment is
the one package curable composition as described above
wherein X is an alkoxy group.

Another preferable embodiment is
the one package curable composition as described in any of the above description
wherein the organic polymer of the component (A) is one or more polymers selected from the group consisting of a polyoxyalkylene polymer, a saturated hydrocarbon polymer, and a (meth)acrylic ester polymer.

Another preferable embodiment is
the one package curable composition as described above
wherein the polyoxyalkylene polymer is a polyoxypropylene polymer.

Another preferable embodiment is
the one package curable composition as described in any of the above description
which comprises, as the component (B), (b1) a carboxylic acid, whose carbon atom adjacent to a carbonyl group is a quaternary carbon, and (b2) a metal carboxylate, whose carbon atom adjacent to a carbonyl group is a quaternary carbon.

Another preferable embodiment is
the one package curable composition as described in any of the above description
which comprises, as the component (B), (b1) a carboxylic acid, whose carbon atom adjacent to a carbonyl group is a quaternary carbon, or (b2) a metal carboxylate, whose carbon atom adjacent to a carbonyl group is a quaternary carbon.

Another preferable embodiment is
the one package curable composition as described above
wherein the component (B) is a metal carboxylate whose carbon atom adjacent to a carbonyl group is a quaternary carbon.

In the one package curable composition as described in any of the above description
the metal carboxylate of the component (B) is a tin carboxylate.

Another preferable embodiment is
the one package curable composition as described in any of the above description
which further comprises an amine compound as the component (D).

As described above, a one package curable composition which comprises (A) an organic polymer having a silicon-containing group capable of crosslinking by forming a siloxane bond, (B) (b1) a carboxylic acid whose carbon atom adjacent to a carbonyl group is a quaternary carbon, and/or (b2) a metal carboxylate whose carbon atom adjacent to a carbonyl group is a quaternary carbon, and (C) a surface-treated ground calcium carbonate has good curability and adhesiveness in the face of using an organotin-free catalyst.

### DETAILED DESCRIPTION OF THE INVENTION

Hereinafter, the invention will be described more in detail.

The reactive silicon group-containing organic polymer to be used in the present invention may have any main chain skeleton without any particular limit and may be various kinds of organic polymers having the following main skeletons.

In particular, there may be mentioned polyoxyalkylene polymers such as polyoxyethylene, polyoxypropylene, polyoxybutylene, polyoxytetramethylene, polyoxyethylene-polyoxypropylene copolymer, and polyoxypropylene-polyoxybutylene copolymer; hydrocarbon polymers such as ethylene-propylene copolymer, polyisobutylene, isobutylene-isoprene copolymer, polychloroprene, polyisoprene, copolymer of isoprene or butadiene with acrylonitrile and/or styrene etc., polybutadiene, copolymer of isoprene or butadiene with acrylonitrile and styrene etc., and hydrogenated polyolefin copolymers obtained by hydrogenation of these polyolefin polymers; polyester polymers such as condensation polymers of dibasic acid such as adipic acid and glycol and ring-opening polymers of lactones; (meth) acrylic ester polymers obtained by radical polymerization of monomers such as ethyl (meth) acrylate and butyl (meth)acrylate etc.; vinyl polymers obtained by radical polymerization of monomers such as (meth) acrylic ester monomers, vinyl acetate, acrylonitrile and styrene etc.; graft polymers obtained by polymerization of vinyl monomers in the above-mentioned organic polymers; polysulfide polymers; polyamide polymers such as nylon 6 obtained by ring opening polymerization of ε-caprolactam, nylon 6,6 obtained by condensation polymerization of hexamethylenediamine and adipic acid, nylon 6, 10 obtained by condensation polymerization of hexamethylenediamine and sebacic acid, nylon 11 obtained by condensation polymerization of ε-aminoundecanoic acid, nylon 12 obtained by ring-opening polymerization of ε-aminolaurolactam, and copolymer nylon comprising two or more components of the above-mentioned nylons; polycarbonates produced by condensation polymerization of bisphenol A and carbonyl chloride etc.; diallyl phthalate polymers.

Saturated hydrocarbon polymers such as polyisobutylene, hydrogenated polyisoprene, and hydrogenated polybutadiene, polyoxyalkylene polymers, and (meth) acrylic ester polymers are more preferable since they have relatively low glass transition temperature and give cured products excellent in cold resistance.

The glass transition temperature of the organic polymer as the component (A) is not particularly limited, however it is preferably 20°C or lower, more preferably 0°C or lower, and further preferably -20°C or lower. If the glass transition temperature exceeds 20°C, the viscosity is higher in winter and in a cold area and the workability may be worsened in some cases and the cured product may be deteriorated in flexibility and elongation in some cases. The glass transition temperature is a value measured by DSC measurement.

Also, polyoxyalkylene polymers and (meth)acrylic ester polymers are particularly preferable since they have high moisture permeability and give excellent deep part curability and adhesiveness in the case where they are used for a one package composition and polyoxyalkylene polymers are most preferable.

The reactive silicon group to be contained in the reactive silicon group-containing organic polymer is a group having a hydroxyl or hydrolysable group bonded to a silicon atom and capable of crosslinking by forming a siloxane bond by reaction accelerated by a silanol condensation catalyst. The reactive silicon group may include a group represented by the general formula (1): 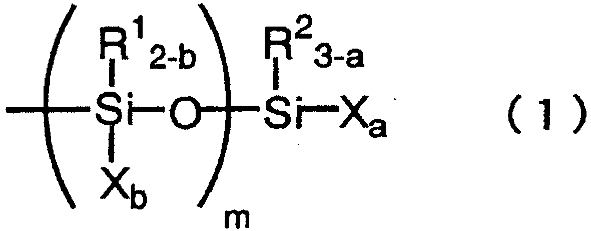 (wherein R¹ and R² independently represent an alkyl group having 1 to 20 carbon atoms, an aryl group having 6 to 20 carbon atoms, an aralkyl group having 7 to 20 carbon atoms, or a triorganosiloxy group defined as (R')₃SiO- (respective substituents R' are independently a substituted or unsubstituted hydrocarbon group having 1 to 20 carbon atoms); respective substituents X independently represent a hydroxyl or hydrolysable group; (a) denotes 0, 1, 2, or 3 and (b) denotes 0, 1, or 2 except the case both (a) and (b) are 0; and m denotes 0 or an integer of 1 to 19).

The hydrolysable group is not particularly limited and may include any conventionally known hydrolysable group. In particular, examples include a hydrogen atom, a halogen atom, an alkoxy, acyloxy, ketoxymate, amino, amido, acid amido, aminoxy, mercapto, alkenyloxy groups. Among them, a hydrogen atom, an alkoxy, acyloxy, keoxymate, amino, amido, aminoxy, mercapto, and alkenyloxy groups are preferable and in terms of moderate hydrolysability and handling easiness, an alkoxy group is particularly preferable.

One to three hydrolysable groups and hydroxyl groups may be bonded to one silicon atom and (a + m x b) is preferably in a range from 1 to 5. In the case where two or more hydrolysable groups and hydroxyl groups are bonded in the reactive silicon group, they may be the same or different.

One or more silicon atoms exist in the reactive silicon group and the number is preferably 20 or less in the case of silicon atoms bonded by siloxane bonds.

Particularly, a reactive silicon group represented by the general formula (2): 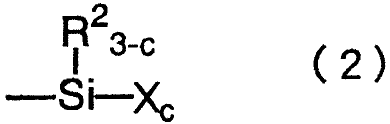 (wherein R² and X are defined as described above and (c) is an integer of 1 to 3) is preferable since it is made available.

Specific examples of R¹ and R² in the above-mentioned general formulae (1) and (2) are alkyl groups such as methyl group and ethyl group; cycloalkyl groups such as cyclohexyl group; aryl groups such as phenyl group; aralkyl groups such as benzyl group; and triorganosiloxy groups defined as (R')₃SiO-(wherein R' denotes methyl, phenyl group). Among them, methyl group is particularly preferable.

Specific examples of the reactive silicon group include trimethoxysilyl group, triethoxysilyl group, triisopropoxysilyl group, dimethoxymethylsilyl group, diethoxymethylsilyl group, and diisopropoxymethylsilyl group. Having high activity to give good curability, trimethoxysilyl group, triethoxysilyl group, and diemethoxymethylsilyl group are more preferable and trimethoxysilyl group is particularly preferable. From a viewpoint of storage stability, dimethoxymethylsilyl group is particularly preferable. The reactive silicon group having 3 hydrolysable groups on one silicon atom such as trimethoxysilyl group, triethoxysilyl group and triisopropoxysilyl group are particularly preferable in terms of restorability, durability, and creep resistance of the curable composition to be obtained. Triethoxysilyl group is particularly preferable since the alcohol to be produced by hydrolysis of the reactive silicon group is ethanol and thus it is more safe.

Introduction of the reactive silicon group may be carried out by a conventionally known method. That is, the following methods may be employed.
(A) An organic polymer having an unsaturated group is obtained by causing reaction of an organic polymer having a functional group such as a hydroxyl group in a molecule with an organic compound having an active group reactive on the functional group and an unsaturated group. Alternatively, the organic polymer having an unsaturated group is obtained by copolymerization with an unsaturated group-containing epoxy compound. Successively, hydrosilylation is carried out by causing reaction of a reactive silicon group-containing hydrosilane on the obtained reaction product.
(B) A compound having a mercapto group and a reactive silicon group is reacted with the organic polymer having an unsaturated group obtained in the same manner as the method (A) .
(C) An organic polymer having a functional group such as a hydroxyl group, an epoxy group, and an isocyanato group in a molecule is reacted with a compound having a functional group reactive on the functional group and a reactive silicon group.

The method described as the method (A) and the method of causing reaction of a polymer having a terminal hydroxyl group and a compound having an isocyanate group and a reactive silicon group in the method (C) are preferable among the above-exemplified methods since they are suitable of achieving high conversion efficiency in a relatively short reaction time. The organic polymer having a reactive silicon group obtained by the method (A) can give a curable composition with lower viscosity and better workability than the organic polymer obtained by the method (C) and the organic polymer obtained by the method (B) has strong odor due to the mercaptosilane and accordingly, the method (A) is particularly preferable.

Specific examples of the hydroxysilane compound to be used in the method (A) include halogenated silanes such as trichlorosilane, methyldichlorosilane, dimethylchlorosilane, and phenyldichlorosilane; alkoxysilanes such as trimethoxysilane, triethoxysilane, methyldiethoxysilane, methyldimethoxysilane, and phenyldimethoxysilane; acyloxysilanes such as methyldiacetoxysilane and phenyldiacetoxysilane; ketoximatosilanes such as bis(dimethylketoximato)methylsilane and bis(cyclohexylketoximato)methylsilane, but the examples thereof are not limited to them. Among them, halogenated silanes and alkoxysilanes are preferable and alkoxysilanes are particularly preferable since the curable composition to be obtained has moderate hydrolysability and is easy to handle. Among the alkoxysilanes, methyldimethylsilane is particularly preferable since it is easily available and the curable composition comprising the organic polymer to be obtained therefrom is excellent in the curability, storage stability, elongation property, and tensile strength.

Among the above-mentioned hydrosilane compounds, those represented by the general formula (3):

H-SiX₃ (3)

(wherein X represents a hydroxyl or hydrolysable group; three Xs may be same or different) are particularly preferable since a curable composition comprising an organic polymer obtained by addition reaction of the hydrosilane compounds is particularly significantly improved in the restorability, durability, and creep resistance. Among the hydrosilane compounds represented by the general formula (3), trialkoxysilanes such as trimethoxysilane, triethoxysilane, and triisopropoxysilane are more preferable.

Among the above-mentioned trialkoxysilanes, in the case of using trialkoxysilanes such as trimethoxysilane having alkoxy groups (e.g. methoxy group) having one carbon atom, disproportionation reaction is sometimes promoted fast. If the disproportionation reaction is promoted, a rather harmful compound such as dimethoxysilane is generated. In terms of the safety of handling, trialkoxysilanes having alkoxy groups having two or more carbon atoms and represented by the general formula (4):

H-Si(OR³)₃ (4)

(wherein three R³s are independently a monovalent organic group having 2 to 20 carbon atoms) are preferable to be used. Triethoxysialne is particularly preferable in terms of the availability, safety of handling, and restorability, durability, and creep resistance of the curable composition to be obtained.

As the synthesis method (B), there may be mentioned, for example, a method of introducing a compound having a mercapto group and a reactive silicon group into an unsaturated bond site of an organic compound by radical addition reaction in the presence of a radical initiator and/or a radical generation source, however it is not particularly limited. Specific examples of the compound having a mercapto group and a reactive silicon group include γ-mercaptopropyltrimethoxysilane, γ-mercaptopropylmethyldimethoxysilane, γ-mercaptopropyltriethoxysilane, γ-mercaptopropylmethyldiethoxysilane, mercaptomethyltrimethoxysilane, mercaptomethyltriethoxysilane, but are not limited to them.

A method for causing reaction of a polymer having a terminal hydroxyl group and a compound having an isocyanate group and a reactive silicon group as the synthesis method (C) may be, for example, the method disclosed in the Japanese Kokai Publication Hei-3-47825, however the method is not particularly limited. Specific examples of the compound having an isocyanate group and a reactive silicon group include γ-isocyanatopropyltrimethoxysilane, γ-isocyanatopropylmethyldimethoxysilane, γ-isocyanatopropyltriethoxysilane, γ-isocyanatopropylmethyldiethoxysilane, isocyanatomethyltrimethoxysilane, isocyanatomethyltriethoxysilane, isocyanatomethyldimethoxymethylsilane, isocyanatomethyldiethoxymethylsilane, but are not limited to them.

As described above, in the case of using a silane compound such as trimethoxysilane having three hydrolysable groups bonded to one silicon atom, disproportionation reaction is sometimes promoted. If the disproportionation reaction is promoted, a rather harmful compound such as dimethoxysilane is generated. However in the case of using γ-mercaptopropyltrimethoxysilane or γ-isocyanatopropyltrimethoxysilane, such disproportionation reaction is not promoted. Therefore, the synthesis method (B) or (C) is preferable to be employed in the case where a group such as trimethoxysilyl having three hydrolysable groups bonded to one silicon atom is used as the silicon-containing group.

The organic polymer having a reactive silicon group may have a linear or branched structure and the polymer has a number average molecular weight on the basis of conversion into polystyrene by GPC in a range from 500 to 100,000, more preferably in a range from 1,000 to 50,000, and further preferably in a range from 3,000 to 30,000. If the number average molecular weight is lower than 500, the cured product tends to be undesirable in terms of the elongation property of the cured product and if it exceeds 100,000, the workability tends to become undesirable because of high viscosity.

To obtain a rubber-like cured product with high strength, high elongation and low modulus of elasticity, the number of reactive silicon groups contained per one molecule of the organic polymer is at least one and more preferably 1.1 to 5 on average. If the number of reactive silicon groups contained in a molecule on average is lower than 1, the curability becomes insufficient and it becomes difficult to obtain good rubber elastic behavior. The reactive silicon group may be at either a terminus of the main chain or a terminus of a side chain of the organic polymer molecular chain or both. Particularly, in the case where the reactive silicon group exists at a terminus of the main chain of the molecular chain, the effective mesh length of the organic polymer component contained in the cured product to be obtained finally is lengthened and it makes easy to obtain the rubber-like cured product having high strength, high elongation, and low modulus of elasticity.

In the invention, in order to obtain the cured product having high restorability, high durability, and high creep resistance, an organic polymer having a reactive silicon group in an average number of 1.7 to 5 per one molecule may be used. The cured product crosslinked by the silanol condensation of the reactive silicon group shows good restorability and as compared with an organic polymer containing less than 1.7 on average of the reactive silicon group per one molecule, the cured product shows remarkably improved creep resistance and durability. In terms of the improvement of the restorability, durability, and creep resistance, the average number of reactive silicon groups per one molecule of the organic polymer is preferably in a range from 2 to 4 and more preferably from 2.3 to 3. If the number of reactive silicon groups per one molecule is less than 1.7, the restorability, durability, and creep resistance of a curable composition of the invention may possibly be insufficient in some cases and if it exceeds 5, the elongation of the cured product to be obtained may possibly become insufficient.

The above-mentioned polyoxyalkylene polymer is substantially a polymer containing of a repeating unit represented by the general formula (5):

**-R⁴-O-** (5)

(wherein R⁴ represents a divalent organic group and a linear or branched alkylene group having 1 to 14 carbon atoms) and R⁴ in the general formula (5) is a linear or branched alkylene group having preferably 1 to 14 carbon atoms and more preferably 2 to 4 carbon atoms. Specific examples of the repeating unit represented by the general formula (5) are as follows. -CH₂O- CH₂CH₂O- 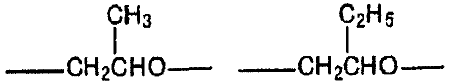 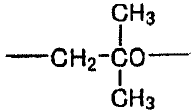 -CH₂CH₂CH₂CH₂O-

The main chain skeleton of the polyoxyalkylene polymer may contain only one kind of repeating unit or two or more kinds of repeating units. Particularly, in the case of using it for a sealant etc., a polymer containing a propylene oxide polymer as a main component is preferable since it is amorphous and has a relatively low viscosity.

A synthesis method of the polyoxyalkylene polymer may include, for example, a polymerization method using an alkaline catalyst such as KOH, a polymerization method using a transition metal compound-porphyrin complex catalyst obtained by causing reaction of an organic aluminum compound and porphyrin as described in Japanese Kokai Publication Sho-61-215623, a polymerization method using a composite metal cyanide complex catalyst disclosed in Japanese Kokoku Publication Sho-46-27250, Japanese Kokoku Publication Sho-59-15336, U.S. Patent No. 3,278,457, U.S. Patent No. 3,278,458, U.S. Patent No. 3, 278, 459, U.S. Patent No. 3,427,256, U.S. Patent No. 3,427,334, and U.S. Patent No. 3,427,335 etc., a polymerization method using a catalyst containing a polyphosphazene salt exemplified in Japanese Kokai Publication Hei-10-273512, and a polymerization method using a catalyst containing a phosphazene compound exemplified in Japanese Kokai Publication Hei-11-060722. However it is not limited to these examples.

A production method of a polyoxyalkylene polymer having a reactive silicon group may include those proposed in Japanese Kokoku Publication Sho-45-36319, Japanese Kokoku Publication Sho-46-12154, Japanese Kokai Publication Sho-50-156599, Japanese Kokai Publication Sho-54-6096, Japanese Kokai Publication sho-55-13767, Japanese Kokai Publication Sho-55-13468, Japanese Kokai Publication Sho-57-164123, Japanese Kokoku Publication Hei-3-2450, U.S. Patent No. 3, 632, 557, U.S. Patent No. 4, 345, 053, U.S. Patent No. 4, 366, 307, and U.S. Patent No. 4,960,844 etc., and also polyoxyalkylene polymers having a number average molecular weight of 6,000 or higher and a Mw/Mn ratio of 1.6 or lower and thus having high molecular weight and narrow molecular weight distribution as described in Japanese Kokai Publication Sho-61-197631, Japanese Kokai Publication Sho-61-215622, Japanese Kokai Publication Sho-61-215623, Japanese Kokai Publication Sho-61-218632, Japanese Kokai Publication Hei-3-72527, Japanese Kokai Publication Hei-3-47825, and Japanese Kokai Publication Hei-8-231707 can be exemplified, but not limited to these examples.

The above-mentioned polyoxyalkylene polymers having a reactive silicon group may be used each alone or two or more of them may be used in combination.

The above-mentioned saturated hydrocarbon polymer is a polymer substantially having no unsaturated carbon-carbon bond other than aromatic ring and the polymer forming its skeleton may be obtained by (1) polymerizing, as a main monomer, an olefin compound having 2 to 6 carbon atoms such as ethylene, propylene, 1-butene, and isobutylene or (2) homopolymerizing a diene compound such as butadiene and isoprene and/or copolymerizing the above-mentioned olefin compound and successively hydrogenating the homopolymer or copolymer. An isobutylene polymer and a hydrogenated polybutadiene polymer are preferable since they are easy to be introduced with a functional group into a terminus thereof and be controled in the molecular weight, and they have possibility to have a large number of terminal functional groups, and an isobutylene polymer is particularly preferable.

Those having a saturated hydrocarbon polymer as a main skeleton are excellent in heat resistance, weather resistance, durability and moisture-shutting property.

The isobutylene polymer may consist of solely isobutylene unit for all monomer units and may be a copolymer of isobutylene unit and another monomer, however in terms of the rubber property, the polymer is preferable to consist of 50% by weight or more, more preferable to consist of 80% by weight or more, and further preferable to consist of 90 to 99% by weight, of a repeating unit derived from isobutylene.

Various kinds of polymerization methods have been reported so far as a synthesis method of the saturated hydrocarbon polymer and particularly in recent years, so-called living polymerization has been developed. In the case of the saturated hydrocarbon polymer, particularly the isobutylene polymer, it is known that the polymer is easy to be produced by employing inifer polymerization (J.P. Kennedy et al., J. Polymer Sci., Polymer Chem. Ed. vol. 15, p. 2843 (1997)) discovered by Kennedy et al. ; that polymerization can be carried out to give a molecular weight in a range from 500 to 100,000 with molecular weight distribution of 1.5 or narrower; and that various kinds of functional groups may be introduced into the molecule termini.

Examples of the production method of the saturated hydrocarbon polymer having a reactive silicon group may be, for example, the methods described in Japanese Kokoku Publication Hei-4-69659, Japanese Kokoku Publication Hei-7-108928, Japanese Kokai Publication Sho-63-254149, Japanese Kokai Publication Sho-64-22904, Japanese Kokai Publication Hei-1-197509, Patent pamphlet No. 2, 539, 445 and Patent pamphlet No. 2,873,395, and Japanese Kokai Publication Hei-7-53882. However the method is not limited to these exemplified methods.

The above-mentioned saturated hydrocarbon polymer having a reactive silicon group may be used alone or two or more kinds of the polymer may be used in combination.

A (meth)acrylic ester monomer composing the main chain of the above-mentioned (meth)acrylic ester polymer is not particularly limited and various kinds of monomers may be used. Examples include (meth)acrylic acid monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth) acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, γ-(methacryloyloxypropyl)dimethoxymethylsilane, methacryloyloxymethyltrimethoxysilane, methacryloyloxymethyltriethoxysilane, methacryloyloxymethyldimethoxymethylsilane, methacryloyloxymethyldiethoxymethylsilane, (meth)acrylic acid ethylene oxide adduct, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, 2-perfluorohexadecylethyl (meth)acrylate. With respect to the (meth) acrylic ester polymer, the following vinyl monomers can be copolymerized together with a (meth) acrylic ester monomer. Examples of the vinyl monomer are styrene monomers such as styrene, vinyltoluene, α-methylstyrene, chlorostyrene, styrenesulfonic acid and its salts; fluorine-containing vinyl monomers such as perfluoroethylene, perfluoropropylene, and vinylidene fluoride; silicon-containing vinyl monomers such as vinyltrimethoxysilane and vinyltriethoxysilane; maleic anhydride, maleic acid, and monoalkyl and dialkyl esters of maleic acid; fumaric acid, and monoalkyl and dialkyl esters of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl monomers such as acrylonitrile and methacrylonitrile; amido group-containing vinyl monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; vinyl chloride, vinylidene chloride, allyl chloride, and allyl alcohol. They may be used alone or a plurality of them may be copolymerized. Among them, in terms of the physical properties of a produced material, polymers comprising a styrene monomer and a (meth) acrylic acid monomer are preferable. (Meth) acrylic polymers comprising an acrylic ester monomer and a methacrylic ester monomer are more preferable and acrylic polymers comprising an acrylic ester monomer are further preferable. In the case of use for general construction, since physical properties such as low viscosity of a mixture and low modulus, high elongation, weather resistance, and heat resistant of the cured product are required, a butyl acrylate monomer is more preferable. On the other hand, in the case of use for an automobile for which oil-proofness etc. is required, an ethyl acrylate-based copolymer is more preferable. Since the polymer comprising mainly ethyl acrylate tends to be slightly inferior in low temperature properties (e.g. cold resistance) although having excellent oil-proofness, in order to improve the low temperature properties, a portion of ethyl acrylate may be replaced with butyl acrylate. However since the good oil-proofness is lowered more as the ratio of butyl acrylate is increased more, the ratio is preferable to be suppressed to 40% or lower and more preferable to be suppressed to 30% or lower for use requiring the oil-proofness. Also, to improve the low temperature properties without deterioration of the oil-proofness, it is preferable to use 2-methoxyethyl acrylate, 2-ethoxyethyl acrylate in which oxygen is introduced in an alkyl group in the side chain. However, since introduction of an alkoxy group having an ether bond in the side chain tends to lower the heat resistance, it is preferable to adjust the ratio to be 40% or lower when heat resistance is needed. In accordance with the various uses and required aims, the required physical properties such as the oil-proofness, heat resistance, and low temperature properties should be considered and consequently, it is possible to adjust the ratio and obtain suitable polymers. For example, although it is not particularly limited, ethyl acrylate/butyl acrylate/2-methoxyethyl acrylate copolymer [(40 to 50)/(20 to 30) / (30 to 20) ratio by weight] can be exemplified as a polymer with good balance of the physical properties such as the oil-proofness, heat resistance, and low temperature properties. In this invention, these preferable monomers may be copolymerized with other monomers and also block-copolymerized with them and in that case, it is preferable that these preferable monomers are contained at a ratio of 40% by weight or higher. In the above descriptions, (meth) acrylic acid means acrylic acid and/or methacrylic acid.

A synthesis method of a (meth)acrylic ester polymer is not particularly limited and a conventionally known method may be employed. However, a polymer obtained by a common free radical polymerization method using an azo compound, a peroxide as a polymerization initiator has a problem that the molecular weight distribution value is generally as high as 2 or higher and the viscosity is thus high. Accordingly, to obtain a (meth) acrylic ester polymer having a crosslinkable functional group at a terminus of molecular chain at a high ratio, and with narrow molecular weight distribution and low viscosity, it is preferable to employ a living radical polymerization method.

Among "living radical polymerization method", "atom transfer radical polymerization method" for polymerizing a (meth)acrylic ester monomer using an organic halide, a halogenated sulfonyl compound as an initiator and a transition metal complex as a catalyst has, in addition to the characteristics of the above-mentioned "living radical polymerization methods", a wide range of the option of the initiator and the catalyst since a halogen etc. which is relatively advantageous for the functional group conversion reaction, and is therefore further preferable as a production method of the (meth)acrylic ester polymer having a specified functional group. Examples of the atom transfer radical polymerization method are, for example, the method described in Matyjaszewski et al., J. Am. Chem. Soc., vol. 117, p. 5614 (1995).

Examples of a production method of the (meth)acrylic ester polymer having a reactive silicon group are, for example, production methods employing free radical polymerization methods using chain transfer agents and described in Japanese Kokoku Publication Hei-3-14068, Japanese Kokoku Publication Hei-4-55444, Japanese Kokai Publication Hei-6-211922. Also, a production method employing an atom transfer radical polymerization method is disclosed in Japanese Kokai Publication Hei-9-272714. However the method is not limited to these exemplified methods.

The above-mentioned (meth) acrylic ester polymers having a reactive silicon group may be used alone or two or more kinds of them may be used in combination.

These organic polymers having a reactive silicon group may be used alone or two or more of themmay be used in combination. Practically, organic polymers obtained by blending two or more kinds of polymers selected from the group consisting of polyoxyalkylene polymers having a reactive silicon group, saturated hydrocarbon polymers having a reactive silicon group, and (meth)acrylic ester polymers having a reactive silicon group may also be used.

Production methods of organic polymers by blending a polyoxyalkylene polymer having a reactive silicon group and a (meth) acrylic ester polymer having a reactive silicon group are proposed in Japanese Kokai Publication Sho-59-122541, Japanese Kokai Publication Sho-63-112642, Japanese Kokai Publication Hei-6-172631, Japanese Kokai Publication Hei-11-16763. However the production method is not limited to these exemplified methods. A preferred specific example is a production method involving blending a polyoxyalkylene polymer having a reactive silicon group with a copolymer having a reactive silicon group and a molecular chain substantially comprising a (meth) acrylic ester monomer unit having an alkyl group of 1 to 8 carbon atoms and represented by the following general formula (6): 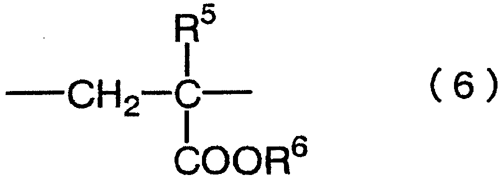
(wherein R⁵ represents a hydrogen atom or a methyl group; and R⁶ denotes an alkyl group having 1 to 8 carbon atoms) and a (meth)acrylic ester monomer unit having an alkyl group of 10 or more carbon atoms and represented by the following general formula (7):

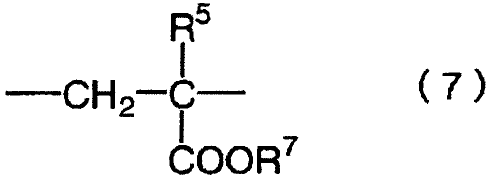

(wherein R⁵ represents the same as defined above; and R⁷ denotes an alkyl group having 10 or more carbon atoms).

Examples of R⁶ in the above-mentioned formula (6) are alkyl groups having 1 to 8, preferably 1 to 4, and more preferably 1 or 2 carbon atoms such as methyl group, ethyl group, propyl group, n-butyl group, tert-butyl group, 2-ethylhexyl group. The alkyl group standing for R⁶ may be a single alkyl group or two or more alkyl groups in combination.

Examples of R⁷ in the above-mentioned formula (7) are long chain alkyl groups having 10 or more, generally 10 to 30, and preferably 10 to 20 carbon atoms such as lauryl group, tridecyl group, cetyl group, stearyl group, behenyl group. Same as the case of R⁶, the alkyl group standing for R⁷ may be a single alkyl group or two or more alkyl groups in combination.

The molecular chain of the (meth) acrylic ester copolymer substantially comprises the monomer units represented by the general formulae (6) and (7) and "substantially" here means the total of the monomer units represented by the general formulae (6) and (7) existing in the copolymer exceeds 50% by weight. The total of the monomer units represented by the general formulae (6) and (7) is preferably 70% by weight or more.

The existence ratio of the monomer unit represented by the general formula (6) and the monomer unit represented by the general formula (7) is preferably from (95:5) to (40:60) and more preferably (90:10) to (60:40) on the basis of weight.

The monomer units which may be contained in the copolymer, other than those represented by the general formulae (6) and (7), may include acrylic acid such as acrylic acid and methacrylic acid; amido group-containing monomers such as acrylamide, methacrylamide, N-methylolacrylamide, and N-methylolmethacrylamide, epoxy group-containing monomers such as glycidyl acrylate and glycidyl methacrylate, and amino group-containing monomers such as diethylaminoethyl acrylate, diethylaminoethyl methacrylate, and aminoethyl vinyl ether; and monomer units derived from acrylonitrile, styrene, α-methylstyrene, alkyl vinyl ether, vinyl chloride, vinyl acetate, vinyl propionate, and ethylene.

The organic polymer obtained by blending the saturated hydrocarbon polymer having a reactive silicon group and the (meth)acrylic ester copolymer having a reactive silicon group may include those proposed in Japanese Kokai Publication Hei-1-168764, Japanese Kokai Publication 2000-186176. However it is not limited to these exemplified polymers.

Further, a production method of the organic polymer obtained by blending the (meth) acrylic ester copolymer having a reactive silicon functional group may also include a method of polymerizing a (meth)acrylic ester monomer in the presence of an organic polymer having a reactive silicon group. The methods are practically disclosed in Japanese Kokai Publication Sho-59-78223, Japanese Kokai Publication Sho-59-168014, Japanese Kokai Publication Sho-60-228516, Japanese Kokai Publication Sho-60-228517. However the method is not particularly limited to these exemplified methods.

On the other hand, the main chain skeleton of the organic polymer may contain another component such as an urethane bond component in an extent that the effect of the invention is not so significantly adversely affected.

The above-mentioned urethane bond component is not particularly limited and may include a group (hereinafter, referred to as an amido segment in some cases) produced by reaction of an isocyanate group and an active hydrogen group.

The amido segment is a group represented by the general formula (8):

-NR⁸-C(=O)- (8)

(wherein R⁸ denotes a hydrogen atom or a substituted or unsubstituted monovalent organic group).

The above-mentioned amido segment may substantially include an urethane group produced by reaction of an isocyanato group and a hydroxyl group; an urea group produced by reaction of an isocyanato group and an amino group; a thiourethane group produced by reaction of an isocyanato group and a mercapto group. Also, in the invention, groups produced by reaction of an active hydrogen in the above-mentioned urethane group, urea group, and thiourea group further with an isocyanato group are also included as the group represented by the general formula (8).

An industrially easy method for producing the organic polymer having the amido segment and a reactive silicon group may include, for example, a method for producing the organic polymer by causing reaction of an excess amount of a polyisocyanate compound with an organic polymer having an active hydrogen-containing group at a terminus for obtaining a polymer having an isocyanato group at the terminus of a polyurethane type main chain and either successively or simultaneously causing reaction of the W-group of a silicon compound represented by the general formula (9) with all or a portion of the isocyanato group:

W-R⁹-SiR²_{3-c}X_{c} (9)

(wherein R², X, and c are the same as described above; R⁹ denotes a divalent organic group and more preferably a substituted or unsubstituted divalent hydrocarbon group having 1 to 20 carbon atoms; W denotes an active hydrogen-containing group selected from a hydroxyl, carboxyl, mercapto, and (primary or secondary) amino groups). Conventionally known production methods of the organic polymer relevant to the above-mentioned production method are exemplified in Japanese Kokoku Publication Sho-46-12154 (U.S. Patent No. 3,632,557), Japanese Kokai Publication Sho-58-109529 (U.S. Patent No. 4,374,237), Japanese Kokai Publication Sho-62-13430 (U.S. Patent No. 4,645,816), Japanese Kokai Publication Hei-8-53528 (EPO Patent No. 0676403), Japanese Kokai Publication Hei-10-204144 (EPO Patent No. 0831108), Japanese Kohyo Publication 2003-508561 (U.S. Patent No. 6,197,912), Japanese Kokai Publication Hei-6-211879 (U.S. Patent No. 5,364,955), Japanese Kokai Publication Hei-10-53637 (U.S. Patent No. 5,756,751), Japanese Kokai Publication Hei-11-100427, Japanese Kokai Publication 2000-169544, Japanese Kokai Publication 2000-169545, Japanese Kokai Publication 2002-212415, Japanese Patent No. 3,313,360, U.S. Patent No. 4,067,844, .S. Patent No. 3,711,445, Japanese Kokai Publication 2001-323040.

Also, the method may include a method for producing the organic polymer by causing reaction of a reactive silicon group-containing isocyanate compound represented by the general formula (10) with an organic polymer having an active hydrogen-containing group at a terminus:

O=C=N-R⁹-SiR²_{3-c}X_{c} (10)

(wherein R², R⁹, X, and c are the same as described above). Conventionally known production methods of the organic polymer relevant to the above-mentioned production method are exemplified in Japanese Kokai Publication Hei-11-279249 (U.S. Patent No. 5,990,257), Japanese Kokai Publication 2000-119365 (U.S. Patent No. 6046270), Japanese Kokai Publication Sho-58-29818 (U.S. Patent No. 4345053), Japanese Kokai Publication Hei-3-47825 (U.S. Patent No. 5068304), Japanese Kokai Publication Hei-11-60724, Japanese Kokai Publication 2002-155145, Japanese Kokai Publication 2002-249538, WO 03/018658, WO 03/059981.

The organic polymer having an active hydrogen-containing group at a terminus may include oxyalkylene polymers having a hydroxyl at a terminus (e.g. polyether polyols), polyacrylic polyols, polyester polyols, saturated hydrocarbon polymers having a hydroxyl group at a terminus (e.g. polyolefin polyols), polythiols compounds, polyamine compounds. Among them, polyether polyols, polyacrylic polyols, and polyolefin polyols are preferable since the glass transition temperature of the organic polymers to be obtained is relatively low and cured products to be obtained are excellent in cold resistance. Particularly, polyether polyols are more preferable since the organic polymers to be obtained have low viscosity, good workability and excellent deep part curability. Polyacrylic polyols and saturated hydrocarbon polymers are further preferable since cured products derived from the organic polymers to be obtained are excellent in weather resistance and heat resistance.

The polyether polyols to be used may be those which are produced by any production method, however the polyether polyols are preferable to have at least 0.7 hydroxyl groups per molecular terminus on average of all molecules. Practically, oxyalkylene polymers produced by using a conventional alkali metal catalyst; and oxyalkylene polymers produced by causing reaction of alkylene oxides with an initiator such as polyhydroxy compounds having at least two hydroxyl groups in the presence of a composite metal-cyanide complex or cesium can be exemplified.

Among the above-mentioned respective polymerization methods, the polymerization method using a composite metal-cyanide complex is preferable since it is made possible to obtain oxyalkylene polymers with low un-saturation degree, narrow Mw/Mn, low viscosity, high acid resistance, and high weather resistance.

Examples of the above-mentioned polyacrylic polyols are polyols having a (meth) acrylic acid alkyl ester (co) polymer as a skeleton and containing a hydroxyl group in a molecule. A synthesis method of the polymers is preferably a living radical polymerization method and more preferably an atom transfer radical polymerization method since they give narrow molecular weight distribution and low viscosity. Also, a polymer obtained by so-called SGO process, that is a polymer obtained by continuous bulk polymerization of an acrylic acid alkyl ester monomer at high temperature and high pressure as described in Japanese Kokai Publication 2001-207157 is preferable to be used. More practically, UH-2000 manufactured by Toagosei Co., Ltd. can be exemplified.

Specific examples of the above-mentioned polyisocyanate compound may include aromatic polyisocyanates such as toluene (tolylene) diisocyanate, diphenylmethane diisocyanate, and xylylene diisocyanate; aliphatic polyisocyanates such as isophorone diisocyanate and hexamethylene diisocyanate.

The silicon compound represented by the general formula (9) is not particularly limited and specific examples thereof are amino group-containing silanes such as γ-aminopropyltrimethoxysilane, N-(β-aminoethyl)-γ-aminopropyltrimethoxysilane, γ-(N-phenyl)aminopropyltrimethoxysilane, N-ethylaminoisobutyltrimethoxysilane, N-cyclohexylaminomethyltriethoxysilane, N-cyclohexylaminomethyldiethoxymethylsilane, and N-phenylaminomethyltrimethoxysilane; hydroxy group-containing silanes such as γ-hydroxypropyltrimethoxysilane; mercapto group-containing silanes such as γ-mercaptopropyltrimethoxysilane. Also, as described in Japanese Kokai Publication Hei-6-211879 (U.S. Patent No. 5,364,956), Japanese Kokai Publication Hei-10-53637 (U.S. Patent NO. 5,756,751), Japanese Kokai Publication Hei-10-204144 (EPO Patent No. 0831108), Japanese Kokai Publication 2000-169544, and Japanese Kokai Publication 2000-169545, Michael adducts of various kinds of α,β-unsaturated carbonyl compounds and primary amino group-containing silanes or Michael adducts of various kinds of (meth)acryloyl group-containing silanes and primary amino group-containing compounds are usable as the silicon compound represented by the general formula (9).

The reactive silicon group-containing isocyanate compound represented by the general formula (10) is not particularly limited and specific examples thereof are γ-trimethoxysilylpropyl isocyanate, γ-triethoxysilylpropyl isocyanate, γ-methyldimethoxysilylpropyl isocyanate, γ-methyldiethoxysilylpropyl isocyanate, trimethoxysilylmethyl isocyanate, diethoxymethylsilylmethyl isocyanate, dimethoxymethylsilylmethyl isocyanate, diethoxymethylsilylmethyl isocyanate. Also, as described in Japanese Kokai Publication 2000-119365 (U.S. Patent No. 6,046,270), compounds obtained by reaction of silicon compounds represented by the general formula (9) and excess amounts of the above-mentioned polyisocyanate compounds are usable as the reactive silicon group-containing isocyanate compound represented by the general formula (10).

If a large quantity of the amido segment exists in the main chain skeleton of the organic polymer as the component (A) of the invention, the viscosity of the organic polymer is increased and the composition may possibly be inferior in workability. On the other hand, due to the amido segment in the main chain skeleton of the component (A), the curability of the composition of the invention tends to be increased. Accordingly, in the case where the amido segment is contained in the main chain skeleton of the component (A), the number of the amido segments is preferably 1 to 10, more preferably 1.5 to 7, and further preferably 2 to 5, per one molecule on average. If it is lower than 1, the curability is sometimes insufficient and if it is more than 10, the organic polymer becomes highly viscous and the composition may become inferior in workability.

In the invention, as the component (B), (b1) a carboxylic acid, whose carbon atom adjacent to a carbonyl group is a quaternary carbon, and/or (b2) a metal carboxylate, whose carbon atom adjacent to a carbonyl group is a quaternary carbon is used. The component (B) of the invention is proper for forming a siloxane bond from a hydroxyl group or a hydrolysable group bond to a silicon atom contained in the organic polymer as the component (A), that is, the component (B) works as so-called silanol condensation catalyst.

It is possible to provide an effect of accelerating curability and improving adhesiveness, which are effects of the invention, by limiting the structure of the carboxylic acid or the carboxylic acid having an acid radical of metal carboxylate as the component (B) to be "a carboxylic acid, whose carbon atom adjacent to a carbonyl group is a quaternary carbon".

The carboxylic acid (b1) and metal carboxylate (b2) may be used alone or in combination. Both cause less load on the environment as an organotin-free catalyst and therefore they are preferable. Particularly, since the carboxylic acid (b1) is a catalyst substantially containing no metal, it is more preferable.

The carboxylic acid (b1) is not limited to carboxylic acids and may include carboxylic acid derivatives such as anhydrides, esters, amides, nitriles, and acyl chlorides of carboxylic acids that produce carboxylic acids by hydrolysis. Particularly, the carboxylic acid (b1) is preferably a carboxylic acid in terms of high catalytic activity.

The carboxylic acid (b1) has a function as a catalyst in the case of being used alone, and is further effective to improve the curability in the case of being used with a metal carboxylate in combination. In the case where the metal carboxylate is used as a curing catalyst, the curability is decreased after storage in some cases and addition of the carboxylic acid (b1) can suppress such decrease of the curability after storage.

Examples of the carboxylic acid (b1) whose carbon atom adjacent to a carbonyl group is a quaternary carbon atom are linear carboxylic acids represented by the general formula (11): 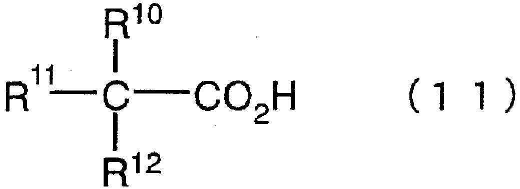
(wherein R¹⁰, R¹¹, and R¹² independently represent a substituted or unsubstituted organic group and may contain a carboxyl group) and cyclic carboxylic acids having structures represented by the general formula (12):

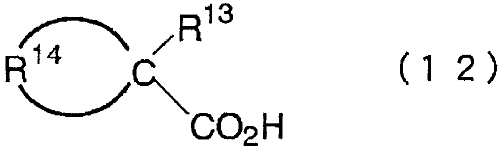

(wherein R¹³ represents a substituted or unsubstituted organic group; R¹⁴ denotes a substituted or unsubstituted divalent organic group; and both may contain a carboxyl group) and represented by the general formula (13):

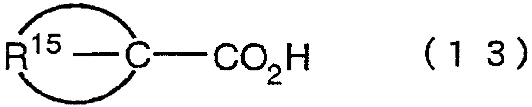

(wherein R¹⁵ denotes a substituted or unsubstituted trivalent organic group and may contain a carboxyl group). Specific examples thereof include linear monocarboxylic acids such as pivalic acid, 2,2-dimethylbutyric acid, 2-ethyl-2-methylbutyric acid, 2,2-diethylbutyric acid, 2,2-dimethylvaleric acid, 2-ethyl-2-methylvaleric acid, 2,2-diethylvaleric acid, 2,2-dimethylhexanoic acid, 2,2-diethylhexanoic acid, 2,2-dimethyloctanoic acid, 2-ethyl-2,5-dimethylhexanoic acid, neodecanoic acid, versatic acid, and 2,2-dimethyl-3-hydroxypropionic acid; linear dicarboxylic acids such as dimethylmalonic acid, ethylmethylmalonic acid, diethylmalonic acid, 2,2-dimethylsuccinic acid, 2,2-diethylsuccinic acid, and 2,2-dimethylglutaric acid; linear tricarboxylic acids such as 3-methylisocitric acid and 4,4-dimethylaconitic acid; cyclic carboxylic acids such as 1-methylcyclopentanecarboxylic acid, 1,2,2-trimethyl-1,3-cyclopentanedicarboxylic acid, 1-methylcyclohexanecarboxylic acid, 2-methylbicyclo[2.2.1]-5-heptene-2-carboxylic acid, 2-methyl-7-oxabicyclo[2.2.1]-5-heptene-2-carboxylic acid, 1-adamantanecarboxylic acid, bicycle[2.2.1]heptane-1-carboxylic acid, bicycle[2.2.2]octane-1-carboxylic acid. Many compounds having these structures exist in nature and they may of course be used.

As the carboxylic acid (b1), particularly in terms of good compatibility with the component (A), monocarboxylic acids are more preferable and linear monocarboxylic acids are further preferable. Further, due to the availability, pivalic acid, neodecanoic acid, versatic acid, 2,2-dimethyloctanoic acid, 2-ethyl-2,5-dimethylhexanoic acid are particularly preferable.

If the melting point of the carboxylic acid (b1) is high (that is, the crystallinity thereof is high), it is difficult to handle the carboxylic acid (that is, the workability thereof is worsened). Accordingly, the melting point of the carboxylic acid (b1) is preferably 65°C or lower, more preferably -50 to 50°C, and even more preferably -40 to 35°C.

The carboxylic acids (b1) have preferably 5 to 20, more preferably 6 to 18, and further preferably 8 to 12 carbon atoms. If the number of the carbon atoms is higher than the range, they tend to be solid and to become hardly compatible with the component (A) and thus no reactivity tends to be obtained. On the other hand, if the number of carbon atoms is lower than the range, they become more volatile and tend to be odorous. From this viewpoint, the carboxylic acid of which the carbon atom adjacent to a carbonyl group is a quaternary carbon atom is most preferably neodecanoic acid, versatic acid, 2,2-dimethyloctanoic acid, and 2-ethyl-2,5-dimethylhexanoic acid.

The carboxylic acids (b1) may be used alone or two or more of them may be used in combination.

On the other hand, if the component (B) is used as a silanol condensation catalyst, the restorability, durability, and the creep resistance of the cured product to be obtained can be improved as compared with the case of using other silanol condensation catalysts. Particularly, the metal carboxylate (b2) of which the carbon atom adjacent to a carbonyl group is a quaternary carbon has effects to improve the curability and adhesiveness besides the above-mentioned effects, and therefore it is preferable.

Preferable examples of the metal carboxylate (b2) are tin carboxylate, lead carboxylate, bismuth carboxylate, potassium carboxylate, calcium carboxylate, barium carboxylate, titanium carboxylate, zirconium carboxylate, hafnium carboxylate, vanadium carboxylate, manganese carboxylate, iron carboxylate, cobalt carboxylate, nickel carboxylate, and cerium carboxylate since they have high catalytic activity, more preferable examples are tin carboxylate, lead carboxylate, bismuth carboxylate, titanium carboxylate, iron carboxylate, and zirconium carboxylate, even more preferable examples may be tin carboxylate, and in terms of the adhesiveness, stannous carboxylate is the most preferable.

Examples of the carboxylic acid having the acid radical of the metal carboxylate (b2) are those exemplified above for the carboxylic acid (b1).

The effects relevant to the compatibility, workability, and volatile property described above are the same in the metal carboxylate having an acid radical. Accordingly, as the metal carboxylate (b2), metal salts of neodecanoic acid, versatic acid, 2,2-dimethyloctanoic acid, and 2-ethyl-2,5-dimethylhexanoic acid are the most preferable.

Specific examples of the metal carboxylate (b2) are tin pivalate, tin neodecanoate, tin versatate, tin 2,2-dimethyloctanoate, tin 2-ethyl-2,5-dimethylhexanoate, lead versatate, bismuth neodecanoate, bismuth versatate, potassium versatate, calcium versatate, barium versatate, titanium versatate, zirconium versatate, hafnium versatate, vanadium versatate, manganese versatate, iron versatate, cobalt versatate, nickel versatate, and cerium versatate. More preferable examples among them are tin neodecanoate, tin versatate, tin 2,2-dimethyloctanoate, tin 2-ethyl-2,5-dimethylhexanoate, lead versatate, bismuth versatate, titanium versatate, iron versatate, and zirconium versatate in terms of high catalytic activity and particularly preferable examples are tin neodecanoate, tin versatate, tin 2, 2-dimethyl octanoate, and tin 2-ethyl-2, 5-dimethylhexanoate in terms of adhesiveness.

These metal carboxylates (b2) may be used alone or two or more of them may be used in combination.

In the case where the carboxylic acid (b1) and the metal carboxylate (b2) are used in combination, it is particularly preferable that the carboxylic acid (b1) and the carboxylic acid having the acid radical of the metal carboxylate (b2) are the same.

The use amount of the component (B) is preferably about 0.01 to 20 parts by weight and more preferably about 0.5 to 10 parts by weight per 100 parts by weight of the component (A). If the addition amount of the component (B) is lower than the above-mentioned range, the curing rate may be retarded in some cases and the catalytic activity may be lowered after storage in some cases. On the other hand, if the addition amount of the component (B) exceeds the above-mentioned range, the usable time becomes so short and then deteriorates the workability. In the case the carboxylic acid (b1) and the metal carboxylate (b2) are used in combination, if the addition amount of the carboxylic acid (b1) is too high, the adhesiveness may be decreased in some cases.

In the invention, carboxylic acids and metal carboxylates other than the component (B) may be used.

Specific examples of the carboxylic acid other than the carboxylic acid (b1) whose carbon atom adjacent to a carbonyl group is a quaternary carbon may include linear saturated fatty acids such as acetic acid, propionic acid, butyric acid, valeric acid, caproic acid, enanthic acid, caprylic acid, 2-ethylhexanoic acid, pelargonic acid, capric acid, undecanoic acid, lauric acid, tridecanoic acid, myristic acid, pentadecanoic acid, palmitic acid, heptadecanoic acid, stearic acid, nonadecanoic acid, arachic acid, behenic acid, lignoceric acid, cerotic acid, montanic acid, melissic acid, and lacceric acid; mono-ene unsaturated fatty acids such as undecylenic acid, linderic acid, tsuzuic acid, physeteric acid, myristoleic acid, 2-hexadecenoic acid, 6-hexadecenoic acid, 7-hexadecenoic acid, palmitoleic acid, petroselinic acid, oleic acid, elaidic acid, asclepic acid, vaccenic acid, gadoleic acid, gondoic acid, cetoleic acid, erucic acid, brassylic acid, selacholeic acid, ximenic acid, rumenic acid, acrylic acid, methacrylic acid, angelic acid, crotonic acid, isocrotonic acid, and 10-undecenoic acid; polyene unsaturated fatty acids such as linoelaidic acid, linoleic acid, 10,12-octadecadienoic acid, hiragonic acid, α-eleostearic acid, β-eleostearic acid, punicic acid, linolenic acid, 8,11,14-eicosatrienoic acid, 7,10,13-docosatrienoic acid, 4,8,11,14-hexadecatetraenoic acid, moroctic acid, stearidonic acid, arachidonic acid, 8,12,16,19-docosatetraenoic acid, 4, 8, 12, 15, 18-eicosapentaenoic acid, clupanodonic acid, herring acid, and docosahexaenoic acid; branched fatty acids such as 1-methylbutyric acid, isobutyric acid, 2-ethylbutyric acid, isovaleric acid, and tuberculostearic acid; triple bond-containing fatty acids such as propiolic acid, tariric acid, stearolic acid, crepenynic acid, ximenynic acid, and 7-hexadecinic acid; alicyclic carboxylic acids such as naphthenic acid, malvalinic acid, sterculic acid, hydnocarpic acid, chaulmoogric acid, and gorlic acid; oxygen-containing fatty acids such as acetoacetic acid, ethoxyacetic acid, glyoxylic acid, glycolic acid, gluconic acid, sabinic acid, 2-hydroxytetradecanoic acid, ipurolic acid, 2-hydroxyhexadecanoic acid, jarapinolic acid, juniperinic acid, ambrettolic acid, aleuritic acid, 2-hydroxyoctadecanoic acid, 12-hydroxyoctadecanoic acid, 18-hydroxyoctadecanoic cid, 9,10-dihydroxyoctadecanoic acid, ricinoleic acid, kamlolenic acid, licanic acid, phellonic acid, and cerebronic acid; halogen-substituted monocarboxylic acids such as chloroacetic acid, 2-chloroacrylic acid, and chlorobenzoic acid. Examples of the aliphatic dicarboxylic acids include saturated dicarboxylic acids such as adipic acid, azelaic acid, pimelic acid, suberic acid, sebacic acid, ethylmalonic acid, glutaric acid, oxalic acid, malonic acid, succinic acid, and oxydiacetic acid; unsaturated dicarboxylic acids such as maleic acid, fumaric acid, acetylenedicarboxylic acid, and itaconic acid. Examples of the aliphatic polycarboxylic acid are tricarboxylic acids such as aconitic acid, citric acid, and isocitric acid. Examples of the aromatic carboxylic acids are aromatic monocarboxylic acids such as benzoic acid, 9-anthracenecarboxylic acid, atrolactinic acid, anisic acid, isopropylbenzoic acid, salicylic acid, and toluic acid; aromatic polycarboxylic acids such as phthalic acid, isophthalic acid, terephthalic acid, carboxyphenylacetic acid, and pyromellitic acid. In addition, usable examples thereof are amino acids such as alanine, leucine, threonine, aspartic acid, glutamic acid, arginine, cysteine, methionine, phenylalanine, tryptophane and histidine.

Among them, the number of carbon atoms including the carbon of the carbonyl group is preferably 2 to 20, more preferably 6 to 17, and even more preferably 8 to 12, in the above-exemplified compounds. In terms of the handling (workability and viscosity), dicarboxylic acids or monocarboxylic acids are preferable and monocarboxylic acids are more preferable. In terms of the availability, curability, and workability, the carboxylic acids other than carboxylic acid (b1) are preferably 2-ethylhexanoic acid, octylic acid, oleic acid, naphthenic acid.

Examples of the metal carboxylates other than the metal carboxylate (b2) whose carbon atom adjacent to a carbonyl group is a quaternary carbon may be various metal carboxylates of the above-mentioned carboxylic acids having an acid radical.

On the other hand, in the case where the activity is low and a proper curability cannot be obtained if the component (B) alone is used, an amine compound, which is the component (D), as a promoter may be added.

Specific examples of the amine compound as the component (D) include aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; aliphatic secondary amines such as dimethylamine, diethylamine, dipropylamine, diisopropylamine, dibutylamine, diamylamine, dihexylamine, diocylamine, bis(2-ethylhexyl)amine, didecylamine, dilaurylamine, dicetylamine, distearylamine, methylstearylamine, ethylstearylamine, and butylstearylamine; aliphatic tertiary amines such as triamylamine, trihexylamine and trioxylamine; aliphatic unsaturated amines such as triallylamine and oleylamine; aromatic amines such as laurylaniline, stearylaniline, and triphenylamine; other amines such as monoethanolamine, diethanolamine, triethanolamine, 3-hydroxypropylamine, diethylenetriamine, triethylenetetramine, benzylamine, 3-methoxypropylamine, 3-lauryloxypropylamine, 3-dimethylaminopropylamine,3-diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole, 1,8-diazabicyclo(5,4,0)undecene-7(DBU), and 1,5-diazabicyclo(4,3,0)nonene-5(DBN), however the amine compound is not limited to these examples.

Since the function of the component (D) as a promoter considerably differs in accordance with the structure of the component (D) itself and the compatibility with the component (A), it is preferable to select these compounds as the component (D) which are suitable according to the type of the component (A) to be used. For example, in the case of using a polyoxyalkylene polymer as the component (A), owing to the high function as a promoter, primary amines such as octylamine and laurylamine are preferable and also amine compounds having a hydrocarbon group containing at least one heteroatom are preferable. Herein, the heteroatom includes N, O, S, however it is not limited to these elements. Examples of the above-mentioned amine compounds are the amines exemplified as other amines. Among them, amine compounds having a hydrocarbon group containing a heteroatom on any carbon atom located at the second to fourth positions are preferable. Examples of the amine compounds are ethylenediamine, ethanolamine, dimethylaminoethylamine, diethylaminoethylamine, 3-hydroxypropylamine, diethylenetriamine, 3-methoxypropylamine, 3-lauryloxypropylaimine, N-methyl-1,3-propanediamine, 3-dimethylaminopropylamine, 3-diethylaminopropylamine, 3-(1-piperadinyl)propylamine, 3-morpholinopropylamine. Especially, 3-diethylaminopropylamine and 3-morpholinopropylamine are more preferable in terms of the high function as a promoter. Since it is made possible to obtain a curable composition with excellent adhesiveness, workability, and storage stability, 3-diethylaminopropylamine is particularly preferable. In terms of the adhesiveness, secondary amines such as distearylamine are preferable. Also, in the case of using an isobutylene polymer as the component (A), relatively long chain aliphatic secondary amines such as dioctylamine and distearylamine and aliphatic secondary amines such as dicyclohexylamine are preferable because they have high functions as a promoter.

The addition amount of the amine compound as the component (D) is preferably about 0.01 to 20 parts by weight and more preferably 0.1 to 5 parts by weight per 100 parts by weight of the organic polymer of the component (A). If the addition amount of the amine compound is lower than 0.01 parts by weight, the curing rate may possibly be retarded and curing reaction may not be promoted sufficiently in some cases. On the other hand, the addition amount of the amine compound exceeds 20 parts by weight, the pot life tends to be so short and then worsen the workability. On the contrary, the curing rate sometimes tends to decrease.

In the invention, a surface-treated ground calcium carbonate is used as the component (C). By using the component (C) as a filler, the problem of the adhesiveness in the case of using the metal carboxylate as the curing catalyst is solved.

The ground calcium carbonate is obtained by mechanically crushing and processing natural chalk, limestone, marble, and the crushing method includes dry and wet methods. A product obtained by the wet crushing may sometimes worsen the storage stability of the curable composition of the invention and therefore, a product obtained by dry crushing is more preferable.

It is indispensable for the ground calcium carbonate to be used for component (C) of the invention to be those surface-treated with a surface treating agent. Use of the surface-treated ground calcium carbonate improves the workability of the composition of the invention and also increases the effect of improving the adhesiveness of the curable composition.

The above-mentioned surface treating agent may include organic substances such as fatty acids, fatty acid soap, and fatty acid esters, various surfactants, and various coupling agents such as a silane coupling agent and a titanate coupling agent. Specific examples are fatty acids such as caproic acid, caprylic acid, pelargonic acid, capric acid, undecanoic acid, lauric acid, myristic acid, palmitic acid, stearic acid, behenic acid, and oleic acid; salts such as sodium salts and potassium salts of these fatty acids; alkyl esters of these fatty acids. Specific examples of the surfactant are sulfuric acid ester type anionic surfactants such as polyoxyethylene alkyl ether sulfuric acid esters and long chain alcohol sulfuric acid esters, and sodium salts and potassium salts of these; sulfonic acid type anionic surfactants such as alkylbenzenesulfonic acid, alkylnaphthalenesulfonic acid, paraffinsulfonic acid, α-olefinsulfonic acid, alkylsulfosuccinic acid, and sodium salts and potassium salts of these.

The use amount of the surface treating agent is preferably 0.1 to 20% by weight and more preferably 1 to 5% by weight per the ground calcium carbonate. If the amount is less than 0.1% by weight, the effect of improving workability and adhesiveness may be insufficient in some cases and if the amount exceeds 20% by weight, the storage stability of the curable composition may be decreased in some cases.

Further, as the average particle diameter of the component (C) is smaller, the strength of the cured product tends to be increased and therefore the curable composition excellent in workability tends to be obtained. The average particle diameter of the component (C) is preferably smaller than 2 µm, more preferably 1.9 µm or smaller, and even more preferably 1.8 µm or smaller.

The addition amount of the component (C) is preferably 5 to 500 parts by weight, more preferably 20 to 350 parts by weight, and even more preferably 40 to 200 parts by weight per 100 parts by weight of the component (A). If the addition amount is lower than 5 parts by weight, the adhesiveness improvement effect for the cured product is insufficient in some cases and if the amount exceeds 500 parts by weight, the workability of the curable composition is deteriorated in some cases.

The component (C) of the invention may be used alone or two or more of them may be used in combination.

The composition of the invention may contain a filler other than the component (C) in an extent that the effect of the invention is not adversely affected. Examples of these fillers are reinforcing fillers such as fumed silica, precipitated silica, crystalline silica, fused silica, dolomite, silicic anhydride, hydrous silicic acid, and carbon black; fillers such as surface-untreated ground calcium carbonate, colloidal calcium carbonate, magnesium carbonate, china clay, calcined clay, clay, talc, titanium oxide, bentonite, organic bentonite, ferric oxide, aluminum fine powder, flint powder, zinc oxide, activated zinc white, shirasu balloon, glass microballoon, organic microballoon of phenol resins and vinylidene chloride resins, and resin powder such as PVC powder and PMMA powder; fibrous fillers such as asbestos, glass fibers and filaments. In the case where the filler is used, the use amount thereof is preferably 1 to 250 parts by weight and more preferably 10 to 200 parts by weight per 100 parts by weight of the organic polymer as the component (A). In order not to adversely affect the effect of the invention, the use amount of the filler is preferably less than the use amount of the surface-treated ground calcium carbonate (C).

As described in Japanese Kokai Publication 2001-181532, the filler may be previously dehydrated and dried by evenly mixing the filler with a dehydration agent such as calcium oxide, enclosing the mixture in a bag made of an air-tight material, and leaving the bag for a proper duration. Use of the filler with lowered water content improves the storage stability particularly in the case of a one package composition.

In the case of obtaining a cured product with high strength by using these fillers, it is preferable to use mainly a filler selected from fumed silica, precipitated silica, crystalline silica, fused silica, dolomite, silicic anhydride, hydrous silicic acid, carbon black, surface-treated fine calcium carbonate, calcined clay, clay, activated zinc white and if it is used in a range from 1 to 200 parts by weight per 100 parts by weight of the organic polymer (A) having a reactive silicon group, a preferred result can be obtained. In the case where a cured product with low strength and high elongation at break is obtained, a preferred result can be attained by mainly using 5 to 200 parts by weight of a filler selected from titanium oxide, calcium carbonate such as ground calcium carbonate, magnesium carbonate, talc, ferric oxide, zinc oxide, shirasu balloon per 100 parts by weight of the organic polymer (A) having a reactive silicon group. These fillers may be used alone or two or more of the may be used as a mixture.

To improve the workability (antisagging property) of the composition and deluster the cured product surface, it is preferable to add an organic balloon and/or an inorganic balloon. These fillers may be surface-treated and may be used alone or two ore more of them may be used in combination. To improve the workability (antisagging property), the particle diameter of the balloons is preferable to be 0.1 mm or smaller. To deluster the cured product surface, the above-mentioned particle diameter is preferable to be 5 to 300 µm.

Because the composition of the invention gives the cured product with excellent chemical resistance, for example, the composition can be suitably applied to the joints of exterior walls of houses, such as siding boards, particularly ceramic siding boards, adhesives for exterior wall tiles, adhesives for exterior wall tiles that remain in joints as they are, but it is preferable to match the sealant design to the exterior wall design. As exterior walls, in particular, those with a deluxe feeling created by spatter coating or incorporation of colored aggregates etc. become to be used. When a scaly or particulate substance not less smaller 0.1 mm, preferably about 0.1 to 5.0 mm, in diameter is formulated into the composition of the invention, the cured product matches up well with such deluxe-finished exterior walls and, in addition, shows good chemical resistance. Thus, the composition is enabled to give the cured product capable of retaining the appearance over years. When a particulate substance is formulated, a pebbled or sandstone-like coarse surface texture can be expressed. When a scaly substance is formulated, an irregular surface resulting from its scaly shape can be expressed.

As described in Japanese Kokai Publication Hei-9-53063, the diameter, addition amount, and materials desirable for the scaly or particulate substance are as follows.

The diameter is 0.1 mm or larger and preferably about 0.1 to 5.0 mm and may be selected properly in accordance with the material, the pattern of the exterior wall. Those substances with a diameter of about 0.2 to 5.0 mm or about 0.5 to 5.0 mm are also usable. In the case of a scaly substance, the thickness to the diameter is proper to be about 1/10 to 1/5 (that is, the diameter is proper to be about 0.01 to 1.00 mm). The scaly or particulate substance is previously mixed with a base material of sealant and transported to the working field as a sealant or mixed with the base material of sealant at the working field when used.

The scaly or particulate substance is added in a range from about 1 to 200 parts by weight per 100 parts by weight of the composition such as the sealant composition or the adhesive composition. The addition amount is properly selected in accordance with the size of the scaly or particulate substance, the material and patterns of the exterior wall.

Examples to be used as the scaly or particulate substance may be natural substances such as silica sand and mica; synthetic rubber, synthetic resins, and inorganic material such as alumina. To improve the design quality when the substance is used for filling the joint, the scaly or particulate substance is colored with a proper color matched with the material and patterns of the exterior wall.

A preferable finishing method is described in Japanese Kokai Publication Hei-9-53063.

Also, if a balloon (preferably those with an average particle diameter of 0.1 mm or larger) is used for the same purpose, the pebbled or sandstone-like coarse surface texture can be obtained and the weight can be reduced. As described in Japanese Kokai Publication Hei-10-251618, the diameter, the addition amount, and the type of a preferable balloon are as follows.

The balloon is a spherical filler having a hollow inside. The material of the balloon may be inorganic materials such as glass, shirasu, and silica; and organic materials such as phenol resins, urea resins, polystyrene, and Saran, however it is not limited to these examples and an inorganic material and an organic material may be compounded or layered to form a plurality of layers. Inorganic, or organic, or their composite balloons may be used, for example. Also, the balloon to be used may be a single type one or a plurality of kinds of balloons of different materials may be used as a mixture. Further, the surface of the balloon to be used may be processed or coated, or may be treated with various kinds of surface treating agents. For example, an organic balloon may be coated with calcium carbonate, talc, titanium oxide; or an inorganic balloon may be surface-treated with a silane coupling agent.

To obtain the pebbled or sandstone-like coarse surface texture, the diameter of the balloon is preferably 0.1 mm or larger. The balloons having a diameter of about 0.2 to 5.0 mm or about 0.5 to 5.0 mm are also usable. In the case where the diameter is smaller than 0.1 mm, even if a large quantity of the balloon is added, it only results in increase of the viscosity of the composition and no coarse surface texture can be obtained in some cases. The addition amount of the balloon may be easily determined in accordance with the coarseness of the desired pebbled or sandstone-like texture. Generally, it is desirable to add the balloon having a diameter of 0.1 mm or larger in an amount of 5 to 25% by volume in the composition. If the concentration by volume of the balloon is lower than 5% by volume, no coarse surface texture can be obtained. If the concentration exceeds 25% by volume, there is a tendency of increasing the viscosity of the sealant and the adhesive, worsening the workability, increasing the modulus of the cured product, and thus deteriorating the basic properties of the sealant and adhesive. The concentration by volume is particularly preferably 8 to 22% by volume in terms of the balance with the basic properties of the sealant.

In the case of using balloons, it is allowed to use a slip preventing agent as described in Japanese Kokai Publication 2000-154368 and an amine compound, particularly a primary and/or a secondary amine with a melting point of 35°C or higher as described in Japanese Kokai Publication 2001-164237 for making the surface of a cured product uneven and delustered.

Specific examples of the balloon are described in Japanese Kokai Publication Hei-2-129262, Japanese Kokai Publication Hei-4-8788, Japanese Kokai Publication Hei-4-173867, Japanese Kokai Publication Hei-5-1225, Japanese Kokai Publication Hei-7-113073, Japanese Kokai Publication Hei-9-53063, Japanese Kokai Publication Hei-10-251618, Japanese Kokai Publication 2000-154368, Japanese Kokai Publication 2001-164237, WO 97/05201.

Also, thermally-expansive hollow microspheres described in Japanese Kokai Publication 2004-51701, Japanese Kokai

Publication 2004-66749 can be used. The phrase "the thermally-expansive hollow microspheres" means plastic spheres obtained by spherically enclosing low boiling point compounds such as a hydrocarbon with 1 to 5 carbon atoms by a polymer coating material (vinylidene chloride copolymer, an acrylonitrile copolymer, or a vinylidene chloride-acrylonitrile copolymer). Heating of the adhesion part formed using the composition of the invention increases the gas pressure in the coat of the thermally-expansive hollow microspheres and softens the polymer coating material to drastically expand the volume and separate the adhesion interface. Addition of the thermally-expansive hollow microspheres gives a thermally peelable adhesive composition which can be easily peeled by heating at the time of disposal without breaking materials and using any organic solvents.

Even in the case where the composition of the invention contains sealant-cured particles, the cured product can be provided with an uneven surface and an improved design. The diameter, addition amount, and usable materials etc. for the sealant-cured particles are preferable to be as described in Japanese Kokai Publication 2001-115142. The diameter is preferably 0.1 to 1 mm and more preferably about 0.2 to 0.5 mm. The addition amount is preferably in a range from 5 to 100% by weight and more preferably in a range from 20 to 50% by weight in the curable composition. The usable materials may be urethane resins, silicones, modified silicones, polysulfide rubber and they are not particularly limited if they are usable for a sealant. Modified silicone type sealants are preferable.

The carboxylic acid and/or metal carboxylate (B) is used as the curing catalyst of the invention and to an extent that the effect of the invention is not lowered, another curing catalyst may be used in combination. Specific examples of these may be titanium compounds such as tetrabutyl titanate, tetrapropyl titanate, titanium tetrakis(acetylacetonate), bis(acetylacetonato)diisopropoxytitanium, diisopropoxytitanium bis(ethylacetoacetate); organotin(IV) compounds such as dibutyltin dilaurate, dibutyltin maleate, dibutyltin phthalate, dibutyltin dioctanoate, dibutyltin bis(2-ethylhexanoate), dibutyltin bis(methylmaleate), dibutyltin bis(ethylmaleate), dibutyltin bis(butylmaleate), dibutyltin bis(octylmaleate), dibutyltin bis(tridecylmaleate) dibutyltin bis(benzylmaleate), dibutyltin diacetate, dioctyltin bis(ethylmaleate), dioctyltin bis(octylmaleate), dibutyltin dimethoxide, dibutyltin bis(nonylphenoxide), dibutenyltin oxide, dibutyltin oxide, dibutyltin bis (acetylacetonate), dibutyltin bis (ethylacetoacetate), a reaction product of dibutyltin oxide and a silicate compound, and a reaction product of dibutyltin oxide and a phthalic acid ester; organoaluminum compounds such as aluminum tris(acetylacetonate), aluminum tris(ethylacetoacetate), and diisopropoxyaluminum ethyl acetoacetate; zirconium compounds such as zirconium tetrakis(acetylacetonate). Use of these curing catalysts in combination increases the catalytic activity, deep part curability, thin film curing property, adhesiveness. However, depending on the addition amount, the organotin compounds may lower the restorability, durability, and creep resistance of the cured product derived from the curable composition to be obtained.

Further, a silicate may be used for the composition of the invention. The silicate works as a crosslinking agent and has a function of improving the restorability, durability, and creep resistance of the organic polymer as the component (A) of the invention. Further, it also has a function of improving the effect to improve the adhesiveness and water-proof adhesiveness, and adhesion durability at a high temperature and high humidity condition. Tetraalkoxysilane or partially hydrolyzed condensates of the tetraalkoxysilane may be used as the silicate. In the case where a silicate is used, the use amount thereof is preferably 0.1 to 20 parts by weight and more preferably 0.5 to 10 parts by weight per 100 parts by weight of the organic polymer as the component (A).

Specific examples of the silicates are tetraalkoxysilanes (tetraalkyl silicates) such as tetramethoxysilane, tetraethoxysilane, ethoxytrimethoxysilane, dimethoxydiethoxysilane, methoxytriethoxysilane, tetra(n-propoxy)silane, tetra(iso-propoxy)silane, tetra(n-butoxy)silane, tetra(iso-butoxy)silane, and tetra(tert-butoxysilane), and their partially hydrolyzed condensates.

The partially hydrolyzed condensates of the tetraalkoxysilanes are more preferable since the condensates are more effective to improve the restorability, durability and creep resistance of the invention than tetraalkoxysilanes.

The above-mentioned partially hydrolyzed condensates of the tetraalkoxysilanes are obtained by a common method of adding water to a tetralkoxysilane and thereby partially hydrolyzing and condensing the tetraalkoxysilane. Further, commercialized products may be used as the partially hydrolyzed condensates of the organosilicate compounds. Examples of the condensates are Methyl silicate 51 and Ethyl silicate 40 (both manufactured by Colcoat Co., Ltd.).

A plasticizer may be used in the composition of the present invention. Addition of the plasticizer may adjust the viscosity and slump property of the curable composition, and the mechanical properties such as tensile strength and elongation property of the cured product obtained from the curable composition. As examples of the plasticizer, there may be mentioned phthalic acid esters such as dibutyl phthalate, diheptyl phthalate, bis(2-ethylhexyl) phthalate, and butyl benzyl phthalate; non-aromatic dibasic acid esters such as dioctyl adipate, dioctyl sebacate, dibutyl sebacate, and diisodecyl succinate; aliphatic esters such as butyl oleate and methyl acetylricinoleate; phosphoric acid esters such as tricresyl phosphate and tributyl phosphate; trimellitic acid esters; chloroparaffins; hydrocarbon oils such as alkyldiphenyl and partially hydrogenated terphenyl; processed oils; epoxy plasticizers such as epoxylated soybean oil and benzyl epoxystearate.

Further, a polymer plasticizer may be used. If the polymer plasticizer is used, the initial physical properties can be maintained for a long duration as compared with the case of using a low molecular weight plasticizer, which is a plasticizer containing no polymer component in the molecule. Further, the drying property (also called as coatability) is also improved in the case where an alkyd coating material is applied to the cured product. Specific examples of the polymer plasticizer are vinyl polymers obtained by polymerizing vinyl monomers by various methods; polyalkylene glycol esters such as diethylene glycol dibenzoate, triethylene glycol dibenzoate, pentaerythritol ester; polyester-type plasticizers obtained from dibasic acids such as sebacic acid, adipic acid, azelaic acid, and phthalic acid and dihydric alcohols such as ethylene glycol, diethylene glycol, triethylene glycol, propylene glycol, and dipropylene glycol; polyether polyols such as polyethylene glycol, polypropylene glycol, and polytetramethylene glycol having a molecular weight of 500 or higher and more preferably 1,000 or higher, polyether polyol derivertives obtained by converting hydroxyl groups of these polyether polyols into ester groups, ether groups, polyethers; polystyrenes such as polystyrene and poly(α-methylstyrene); polybutadiene, polybutene, polyisobutylene, butadiene-acrylonitrile, however the polymer plasticizer is not limited to these examples.

Among the exemplified polymer plasticizers, those which are compatible with the polymer of the component (A) are preferable. From this viewpoint, polyethers and vinyl polymers are preferable. Further, from the viewpoint where the surface curability and deep part curability are improved and curing delay after storage does not occur, polyethers are preferable and polypropylene glycol is more preferable to be used as a plasticizer. Additionally, in terms of the compatibility, weather resistance, and heat resistance, vinyl polymers are preferable. Among vinyl polymers, acrylic polymers and/or methacrylic polymers are preferable and acrylic polymers such as polyacrylic acid alkyl esters are more preferable. A synthesis method of the polymers is preferably a living radical polymerization method and more preferably an atom transfer radical polymerization method since these are suitable for narrowing the molecular weight distribution and lowering the viscosity. Also, a polymer obtained by so-called SGO process, that is a polymer obtained by continuous bulk polymerization of an acrylic acid alkyl ester monomer at high temperature and high pressure as described in Japanese Kokai Publication 2001-207157 is preferable to be used.

The number average molecular weight of the polymer plasticizer is preferably 500 to 15,000, more preferably 800 to 10,000, furthermore preferably 1,000 to 8,000, even more preferably 1, 000 to 5, 000, and most preferably 1,000 to 3, 000. If the molecular weight is too low, the plasticizer is eluted by heat or rain fall with the lapse of time so as to make it difficult to maintain the initial physical properties for a long duration, so as to fail to improve the alkyd coatability. If the molecular weight of the polymer is too high, the viscosity is increased to worsen the workability. Although the molecular weight distribution of the polymer plasticizer is not particularly limited, it is preferably narrow and preferably lower than 1.80. It is further preferably 1.70 or lower, furthermore preferably 1.60 or lower, even more preferably 1.50 or lower, particularly preferably 1.40 or lower, and most preferably 1.30 or lower.

The number average molecular weight is measured by a terminal group analysis method in the case of a polyether polymer and by a GPC method in the case of other polymers. The molecular weight distribution (Mw/Mn) is measured by the GPC method (conversion into polystyrene).

The polymer plasticizer may or may not contain the reactive silicon group. In the case of containing the reactive silicon group, it works as a reactive plasticizer and prevents transfer of the plasticizer from the cured product. In the case where the reactive silicon group is contained, the number of the group is preferably 1 or lower and more preferably 0.8 or lower on average per one molecule. In the case where the plasticizer having a reactive silicon group, particularly an oxyalkylene polymer having a reactive silicon group, is used, the number average molecular weight thereof is necessarily to be lower than that of the polymer of the component (A).

The plasticizer may be used alone or two or more of these may be used in combination. Further, a low molecular weight plasticizer and a polymer plasticizer may be used in combination. These plasticizers may be added at the time of polymer production.

The use amount of the plasticizer is 5 to 150 parts by weight, preferably 10 to 120 parts by weight, and more preferably 20 to 100 parts by weight, per 100 parts by weight of the polymer of the component (A). If it is less than 5 parts by weight, the effect as a plasticizer is not exhibited and if it exceeds 150 parts by weight, the mechanical strength of the cured product becomes insufficient.

The composition of the invention may contain a silane coupling agent, a reaction product of a silane coupling agent, or a compound other than the silane coupling agent as an adhesion promoter. Specific examples of the silane coupling agent are isocyanate group-containing silanes such as γ-isocyanatopropyltrimethoxysilane, γ-isocyanatopropyltriethoxysilane, γ-isocyanatopropylmethyldiethoxysilane, γ-isocyanatopropylmethyldimethoxysilane, isocyanatomethyltrimethoxysilane, isocyanatomethyltriethoxysilane, isocyanatomethyldimethoxysilane, and isocyanatomethyldiethoxymethylsilane; amino group-containing silanes such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-(2-(2-aminoethyl)aminoethyl)aminopropyltrimethoxysilane, γ-(6-aminohexyl)aminopropyltrimethoxysilane, 3-(N-ethylamino)-2-methylpropyltrimethoxysilane, 2-aminoethylaminomethyltrimethoxysilane, N-cyclohexylaminomethyltriethoxysilane, N-cyclohexylaminomethyldiethoxymethylsilane, γ-ureidopropyltrimethoxysilane, γ-ureidopropyltriethoxysilane, N-phenyl-γ-aminopropyltrimethoxysilane, N-phenylaminomethyltrimethoxysilane, N-benzyl-γ-aminopropyltrimethoxysilane, and N-vinylbenzyl-γ-aminopropyltriethoxysilane; mercapto group-containing silanes such as γ-mercaptopropyltrimethoxysilane, γ-mercaptopropyltriethoxysilane, γ-mercaptopropylmethyldimethoxysilane, γ-mercaptopropylmethyldiethoxysilane, mercaptomethyltrimethoxysilane, and mercaptomethyltriethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane; carboxysilanes such as β-carboxyethyltriethoxysilane, β-carboxyethylphenylbis(2-methoxyethoxy)silane, and N-β-(carboxymethyl)aminoethyl-γ-aminopropyltrimethoxysilane ; vinyl type unsaturated group-containing silanes such as vinyltrimethoxysilane, vinyltriethoxysilane, γ-methacryloyloxypropylmethyldimethoxysilane, γ-acryloyloxypropyltriethoxysilane, and methacryloyloxymethyltrimethoxysilane; halogen-containing silanes such as γ-chloropropyltrimethoxysilane; isocyanurate silanes such as tris(3-trimethoxysilylpropyl)isocyanurate. Examples usable as the silane coupling agent may also include modified derivatives of these exemplified compounds such as amino-modified silyl polymers, silylated aminopolymers, unsaturated aminosilane complexes, phenylamino-long chain alkylsilane, aminosilylated silicones, and silylated polyesters. Examples of the reaction product of the silane coupling agent are reaction products of the above-mentioned aminosilanes and epoxysilanes, reaction products of the aminosilanes and isocyanate silanes, partially condensed silane coupling agents. The silane coupling agent to be used in the invention is used generally in a range from 0.1 to 20 parts by weight per 100 parts by weight of the organic polymer (A) having a reactive silicon group. It is more preferable to be used in a range from 0.5 to 10 parts by weight.

The effect of the silane coupling agent to be added to the curable composition of the invention is to remarkably improve the adhesiveness in a non-primer condition or primer condition in the case of using the composition of the invention for various kinds of adherends, that is, inorganic substrates such as glass, aluminum, stainless steel, zinc, copper, and mortar and organic substrates such as polyvinyl chloride, acrylic polymer, polyester, polyethylene, polypropylene, and polycarbonate. In the case where the composition is used in the non-primer condition, the effect to improve the adhesiveness to various kinds of adherends is particularly significant.

Examples of the adhesion promoter other than the silane coupling agents are not particularly limited and for example, epoxy resins, phenol resins, sulfur, alkyl titanates, aromatic polyisocyanate may be exemplified. The above-exemplified adhesion promoters may be used alone or two or more of them may be used as a mixture. Addition of these adhesion promoters can improve the adhesiveness to the adherend.

The composition of the invention may contain a tackfier. The tackfier is not particularly limited and commonly used ones may be used regardless of the phase thereof being solid or liquid at an ambient temperature. Specific examples thereof may be styrene block copolymers, hydrogenated products thereof, phenol resins, modified phenol resins (e.g. cashew oil-modified phenol resins, tall oil-modified phenol resins), terpene phenol resins, xylene-phenol resins, cyclopentadiene-phenol resins, cumarone indene resins, rosin resins, rosin ester resins, hydrogenated rosin ester resins, xylene resins, low molecular weight polystyrene resins, styrene copolymer resins, petroleum resins (e.g., C5 hydrocarbon resins, C9 hydrocarbon resins, C5 hydrocarbon-C9 hydrocarbon copolymer resins), hydrogenated petroleum resins, terpene resins, DCPD resins petroleum resins. They may be used alone and two or more of them may be used in combination. Examples of the styrene block copolymers and the hydrogenated products thereof are styrene-butadiene-styrene block copolymer (SBS), styrene-isoprene-styrene block copolymer (SIS), styrene-ethylene-butylene-styrene block copolymer (SEBS), styrene-ethylene-propylene-styrene block copolymer (SEPS), styrene-isobutylene-styrene block copolymer (SIBS). The above-mentioned tackfiers may be used alone or two or more of them may be used in combination.

The tackifier may be used in a range from 5 to 1,000 parts by weight and preferably 10 to 100 parts by weight per 100 parts by weight of the organic polymer (A).

The composition of the invention may contain a solvent or a diluent. The solvent or diluent is not particularly limited and aliphatic hydrocarbons, aromatic hydrocarbons, alicyclic hydrocarbons, halogenated hydrocarbons, alcohols, esters, ketones, ethers may be used. In the case where a solvent or diluent is used, in terms of a problem of air pollution at the time of using the composition indoors, the boiling point of the solvent is preferably 150°C or higher, more preferably 200°C or higher, and further preferably 250°C or higher. The above-mentioned solvents or diluents may be used alone or two or more of them may be used in combination.

Based on the necessity, the curable composition of the invention may contain a physical property modifier for adjusting tensile properties of the cured product to be obtained. The physical property modifier is not particularly limited and examples thereof are alkylalkoxysilanes such as methyltrimethoxysilane, dimethyldimethoxysilane, trimethylmethoxysilane, and n-propyltrimethoxysilane; alkylisopropenoxysilanes such as dimethyldiisopropenoxysilane, methyltriisopropenoxysilane, γ-glycidoxypropylmethyldiisopropenoxysilane; functional group-containing alkoxysilanes such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane, γ-mercaptopropylmethyldimethoxysilane; silicone varnishes; polysiloxanes. Use of the above-mentioned physical property modifiers increases the hardness of the cured product obtained by curing the composition of the invention, or, on the contrary, decreases the hardness in order to increase the elongation at break. The above-mentioned physical property modifiers may be used alone or two or more of them may be used in combination.

Particularly, a compound from which a compound containing a monovalent silanol group in a molecule is produced by hydrolysis has a function of decreasing the modulus of the cured product without worsening the stickiness of the surface of the cured product. Particularly, a compound from which trimethylsilanol is produced is preferable. Examples of the compound from which a compound containing a monovalent silanol group in a molecule is produced by hydrolysis are compounds described in Japanese Kokai Publication Hei-5-117521. Further, examples of the compound may include derivatives of alkylalcohols, such as hexanol, octanol and decanol, from which silicon compounds forming R₃SiOH such as trimethylsilanol are produced by hydrolysis; derivatives of polyhydric alcohols having 3 or more hydroxyl groups, such as trimethylolpropane, glycerin, pentaerythritol and sorbitol, as described in Japanese Kokai Publication Hei-11-241029, from which silicone compounds forming R₃SiOH such as trimethylsilanol are produced by hydrolysis.

Examples may further include oxypropylene polymer derivatives as described in Japanese Kokai Publication Hei-7-258534 from which silicon compounds forming R₃SiOH such as trimethylsilanol are produced by hydrolysis. Usable examples may also include polymers having a silicon-containing group to be converted into monosilanol-containing compounds by hydrolysis with a crosslinkable and hydrolysable silicon-containing group, as described in Japanese Kokai Publication Hei-6-279693.

The physical property modifier is used in a range from 0.1 to 20 parts by weight and preferably from 0.5 to 10 parts by weight per 100 parts by weight of the organic polymer (A) having a reactive silicon group.

The curable composition of the invention may contain a thixotropic agent (antisagging agent) for preventing sagging in order to improve the workability, according to need. The antisagging agent is not particularly limited and polyamide waxes; hydrogenated castor oil derivatives; metal soaps such as calcium stearate, aluminum stearate, and barium stearate. Further, if rubber powders with a particle diameter of 10 to 500 µm as described in Japanese Kokai Publication Hei-11-349916 and/or organic fibers as described in Japanese Kokai Publication 2003-155389 are used, the composition with high thixotropy and good workability can be obtained. These thixotropic agents (antisagging agents) may be used alone or two or more of them may be used in combination. The thixotropic agent may be used in a range from 0.1 to 20 parts by weight per 100 parts by weight of the organic polymer (A) having a reactive silicon group.

The composition of the invention may contain a compound having an epoxy group in one molecule. Addition of the compound having an epoxy group increases the restorability of the cured product. Examples of the compound having an epoxy group may include epoxylated unsaturated fats and oils, epoxylated unsaturated fatty acid esters, alicyclic epoxy compounds and epichlorohydrin derivatives, mixtures of these compounds. More particular examples thereof are epoxylated soybean oils, epoxylated linseed oil, bis(2-ethylhexyl)-4,5-epoxycyclohexane-1,2-dicarboxylate (E-PS), epoxyoctyl stearate, epoxybutyl stearate. E-PS is particularly preferable among them. The epoxy compound is preferable to be used in a range from 0.5 to 50 parts by weight per 100 parts by weight of the organic polymer (A) having reactive silicon group.

The composition of the invention may contain a photocurable substance. Addition of the photocurable substance makes it possible to form a coating of the photocurable substance on the cured product surface and to improve the stickiness and weather resistance of the cured product. The photocurable substance is a compound causing chemical changes in the molecular structure within a very short time by light radiation and thereby causing changes in physical properties such as curing. This kind of compounds is known well in form of an organic monomer, an oligomer, a resin, a composition containing them, and many others. All kinds of commercialized products may be used. Typical examples thereof are unsaturated acrylic compounds, polyvinyl cinnamates, azido resins. The unsaturated acrylic compounds may include monomers and oligomers having one or several acrylic or methacrylic unsaturated groups, and mixtures thereof; e.g. monomers and oligoesters with a molecular weight of 10,000 or lower, such as propylene (or butylene, or ethylene) glycol di(meth)acrylate and neopentyl glycol di(meth)acrylate. As more specific examples, there may be mentioned such special acrylates (difunctional) as ARONIX M-210, ARONIX M-215, ARONIX M-220, ARONIX M-233, ARONIX M-240, and ARONIX M-245; such trifunctional ones as ARONIX M-305, ARONIX M-309, ARONIX M-310, ARONIX M-315, ARONIX M-320, and ARONIX M-325; such polyfunctional ones as ARONIX M-400. Compounds containing an acrylic functional group are particularly preferable and compounds containing 3 or more functional groups on average in one molecule are more preferable. (All the above-mentioned ARONIX species are products of Toagosei Co., Ltd.)

Examples of the polyvinyl cinnamates are photosensitive resins having a cinnamoyl group as a photosensitive group and obtained by esterifying a polyvinyl alcohol with a cinnamic acid and many polyvinyl cinnamate derivatives as well. The azido resins are known as photosensitive resins having an azido group as a photosensitive group and in general, may include photosensitive rubber liquids obtained by adding a diazido compound as a photosensitizer, and further, detailed examples are found in "Kankosei Jushi (Photosensitive Resins)" (published March 17, 1972 by Insatsu Gakkai Shuppanbu, pages 93 ff, 106 ff, 117 ff). They may be used alone or as a mixture and if necessary, a sensitizer may be added. In the case where a sensitizer such as ketones and nitro compounds or a promoter such as amines is added, the effect is improved in some cases. The photocurable substance is used in a range from 0.1 to 20 parts by weight and preferably in a range from 0.5 to 10 parts by weight per 100 parts by weight of the organic polymer (A) having a reactive silicon group. If it is lower than 0.1 parts by weight, no effect to increase the weather resistance is caused and if it exceeds 20 parts by weight, the cured product tends to become so hard to cause cracks.

The composition of the invention may contain an oxygen-curable substance. The oxygen-curable substance may include unsaturated compounds reactive on oxygen in the air and has function of forming a cured coating in the vicinity of the cured product surface by reaction with oxygen in the air and thereby preventing stickiness of the surface and adhesion of the dust and dirt to the cured product surface. Specific examples of the oxygen-curable substance are dry oils represented by tung oil and linseed oil and various kinds of alkyd resins obtained by modifying these compounds; acrylic polymers, epoxy resins, and silicon resins modified by dry oils; liquid polymers such as polymers of 1,2-polybutadiene, 1,4-polybutadiene, C5-C8 diene obtained by polymerization or copolymerization of diene compounds such as butadiene, chloroprene, isoprene, and 1,3-pentadiene, liquid copolymers such as NBR and SBR obtained by copolymerization of the diene compounds with a copolymerizable monomer such as acrylonitrile and stylene in a manner that the diene compounds form main components, various modified compounds of them (e.g. maleated derivatives, boiled oil-modified derivatives). They may be used alone or two or more of them may be used in combination. Tung oil and liquid diene polymers are particularly preferable among them. Further, combination use of a catalyst promoting the oxidation curing reaction or a metal drier may increase the effect in some cases. Examples of the catalyst and the metal drier are metal salts such as cobalt naphthenate, lead naphthenate, zirconium naphthenate, cobalt octylate, and zirconium octylate, amine compounds. The use amount of the oxygen-curable substance is in a range preferably from 0.1 to 20 parts by weight and more preferably from 0.5 to 10 parts by weight per 100 parts by weight of the organic polymer (A) having a reactive silicon group. If the use amount is lower than 0.1 parts by weight, the contamination improvement effect becomes insufficient and if it exceeds 20 parts by weight, the tensile property of the cured product tends to be deteriorated. As described in Japanese Kokai Publication Hei-3-160053, the oxygen-curable substance may be used preferably in combination with the photocurable substance.

The composition of the invention may contain an antioxidant (anti-aging agent). If the antioxidant is used, the heat resistance of the cured product can be increased. Examples of the antioxidant are hindered phenol-type antioxidants, monophenol-type antioxidants, bisphenol-type antioxidants, and polyphenol-type antioxidants, and hinderd phenol-type antioxidants are particularly preferable. Similarly, usable examples thereof are hindered amine-type light stabilizers commercialized as TINUVIN 622LD, TINUVIN 144, CHIMASSORB 944LD, and CHIMASSORB 119FL (all manufactured by Ciba Specialty Chemicals), MARK LA-57, MARK LA-62, MARK LA-67, MARK LA-63, and MARK LA-68 (all manufactured by Asahi Denka Co., Ltd.), Sanol LS-770, Sanol LS-765, Sanol LS-292, Sanol LS-2626, Sanol LS-1114, and Sanol LS-744 (all manufactured by Sankyo Co., Ltd.). Specific examples of the antioxidant are also described in Japanese Kokai Publication Hei-4-283259 and Japanese Kokai Publication 9-194731. The use amount of the antioxidant is in a range preferably from 0.1 to 10 parts by weight and more preferably from 0.2 to 5 parts by weight per 100 parts by weight of the organic polymer (A) having a reactive silicon group.

The composition of the invention may contain a light stabilizer. If the light stabilizer is used, the photo-oxidation deterioration of the cured product can be prevented. Examples to be used as the light stabilizer may include benzotriazole compounds, hindered amine compounds, benzoate compounds, and hindered amine compounds are particularly preferable. The use amount of the light stabilizer is in a range preferably from 0.1 to 10 parts by weight and more preferably from 0.2 to 5 parts by weight per 100 parts by weight of the organic polymer (A) having a reactive silicon group. Specific examples of the light stabilizer are also described in Japanese Kokai Publication Hei-9-194731.

In the case where the photocurable substance is added to the composition of the invention, particularly in the case where an unsaturated acrylic acid compound is added, it is preferable to use a tertiary amine-containing hindered amine-type light stabilizer as described in Japanese Kokai Publication Hei-5-70531 as the hindered amine-type light stabilizer in terms of the improvement of the storage stability of the composition. Examples of the tertiary amine-containing hindered amine-type light stabilizer are TINUVIN 622LD, TINUVIN 144, and CHIMASSORB 119FL (all manufactured by Ciba Specialty Chemicals); MARK LA-57, LA-62, LA-67, and LA-63 (all manufactured by Asahi Denka Co., Ltd.); Sanol LS-765, LS-292, LS-2626, LS-1114, and LS-744 (all manufactured by Sankyo Co., Ltd.) stabilizers.

The composition of the invention may contain an ultraviolet absorber. Use of the ultraviolet absorber can increase the weather resistance of the surface of the cured product. Examples of the ultraviolet absorber may be benzophenone compounds, benzotriazole compounds, salicylate compounds, substituted tolyl compounds, metal chelate compounds, and benzotriazole compounds are particularly preferable. The use amount of the ultraviolet absorber is preferably in a range from 0.1 to 10 parts by weight and more preferably from 0.2 to 5 parts by weight per 100 parts by weight of the organic polymer (A) having a reactive silicon group. It is preferable to use a phenol-type or hindered phenol-type antioxidant, a hindered amine-type light stabilizer, and a benzotriazole-type ultraviolet absorber in combination.

The composition of the invention may contain an epoxy resin. The composition that contains the epoxy resin is preferable to be used as an adhesive, particularly as an adhesive for exterior wall tiles. Examples of the epoxy resin are epichlorohydrin-bisphenol A epoxy resins, epichlorohydrin-bisphenol F epoxy resins, flame-retardant epoxy resins such as tetrabromobisphenol A glycidyl ether, novolak epoxy resins, hydrogenated bisphenol A epoxy resins, glycidyl ether epoxy resins of a bisphenol A propyleneoxide adduct, p-oxybenzoic acid glycidyl ether ester epoxy resins, m-aminophenol epoxy resins, diaminodiphenylmethane epoxy resins, urethane-modified epoxy resins, various kinds of alicyclic epoxy resins, N,N-diglycidylaniline, N,N-diglycidyl-o-toluidine, triglycidyl isocyanurate, polyalkylene glycol diglycidyl ether, glycidyl ether of polyhydric alcohols such as glycerin, hydantoin epoxy reins, epoxides of unsaturated polymers such as petroleum resins, however the epoxy resin is not limited to these examples and commonly used epoxy resins are all usable. Those having two or more epoxy groups in a molecule have high reactivity at the time of curing and make the cured product easy to form a three-dimensional mesh structure, and therefore they are preferable. More preferable examples thereof are bisphenol A epoxy resins, novolak epoxy resins. The use ratio of these epoxy resins and the organic polymer (A) having a reactive silicon group is in a range from (100/1) to (1/100) on the basis of (A)/(epoxy resins) by weight. If the ratio (A)/(epoxy resins) is lower than 1/100, it becomes difficult to cause an effect of improving the impact strength and strong toughness of the epoxy resin cured product and if the ratio (A) / (epoxy resins) exceeds 100/1, the strength of the organic polymer cured product becomes insufficient. A preferable use ratio cannot be defined clearly since it depends on the uses of the resin curing composition, however in the case of improving impact resistance, flexibility, strong toughness, peel strength of the epoxy resin cured product, the component (A) is preferably used in a range from 1 to 100 parts by weight and more preferably from 5 to 100 parts by weight per 100 parts by weight of the epoxy resins. On the other hand, in the case of improving strength of the cured product of the component (A), the epoxy resins are preferably used in a range from 1 to 200 parts by weight and more preferably from 5 to 100 parts by weight per 100 parts by weight of the component (A).

In the case where the epoxy resin is added, the composition of the invention may naturally contain a curing agent for curing the epoxy resin. Examples of the epoxy resin curing agent are not particularly limited and commonly used epoxy resin curing agents may be used. Specific examples thereof are primary and secondary amines such as triethylenetetramine, tetraethylenepentamine, diethylaminopropylamine, N-aminoethylpiperidine, m-xylylenediamine, m-phenylenediamine, diaminodiphenylmethane, diaminodiphenylsulfone, isophoronediamine, amine-terminated polyethers; tertiary amines such as 2,4,6-tris(dimethylaminomethyl)phenol, and tripropylamine and salts of these tertiary amines; polyamide resins; imidazoles; dicyanodiamides; boron trifluoride complex compounds; carboxylic anhydrides such as phthalic anhydride, hexahydrophthalic anhydride, tetrahydrophthalic anhydride, dodecinyl succinic anhydride, pyromellitic anhydride, and chlorendic anhydride; alcohols; phenols; carboxylic acids; diketone complexes of aluminum or zirconium compounds, however the epoxy resin is not limited to these examples and the curing agent is used alone or two or more of them are used in combination.

In the case of using the curing agent for the epoxy resin, the use amount is in a range from 0.1 to 300 parts by weight per 100 parts by weight of the epoxy resin.

A ketimine may be used as the curing agent for the epoxy resin. The ketimine exists stably in water-free state, and is decomposed into a primary amine and a ketone by water and the produced primary amine is a curing agent for the epoxy resin curable at a room temperature. If the ketimine is used, the one package composition may be obtained. The ketimine can be obtained by condensation reaction of an amine compound and a carbonyl compound.

Synthesis of the ketimine may be carried out using a conventionally known amine compound and carbonyl compound and examples of the amine compound are diamines such as ethylenediamine, propylenediamine, trimethylenediamine, tetramethylenediamine, 1,3-diaminobutane, 2,3-diaminobutane, pentamethylenediamine, 2,4-diaminopentane, hexamethylenediamine, p-phenylenediamine, and p,p'-biphenylenediamine; polyamines such as 1,2,3-triaminopropane, triaminobenzene, tris(2-aminoethyl)amine, and tetrakis(aminomethyl)methane; polyalkylene polyamines such as diethylenetriamine, triethylenetriamine, and tetraethylenepentamine; polyoxyalkylene polyamines; aminosilanes such as γ-aminopropyltriethoxysilane, N-(β**-**aminoethyl)-γ-aminopropyltrimethoxysilane, and N-(β-aminoethyl)-γ-aminopropylmethyldimethoxysilane. Examples of the carbonyl compound are aldehydes such as acetaldehyde, propionaldehyde, n-butylaldehyde, isobutylaldehyde, diethylacetaldehyde, glyoxal, and benzaldehyde; cyclic ketones such as cyclopentanone, trimethylcyclopentanone, cyclohexanone, and trimethylcyclohexanone; aliphatic ketones such as acetone, methyl ethyl ketone, methyl propyl ketone, methyl isopropyl ketone, methyl isobutyl ketone, diethyl ketone, dipropyl ketone, diisopropyl ketone, dibutyl ketone, and diisobutyl ketone; β-dicarbonyl compounds such as acetyl acetone, methyl acetoacetate, ethyl acetoacetate, dimethyl malonate, diethyl malonate, methyl ethyl malonate, and dibenzoylmethane.

In the case where an imino group exists in the ketimine, the imino group may be reacted with styrene oxide; glycidyl ethers such as butyl glycidyl ether and allyl glycidyl ether; glycidyl esters. The above-mentioned ketimines may be used alone or two or more of them may be used in combination. The use amount of the ketimine is in a range from 1 to 100 parts by weight per 100 parts by weight of the epoxy resin and it differs depending on the types of the epoxy resin and ketimine.

The curable composition of the invention may contain a flame retardant, for example, phosphorus-type plasticizer such as ammonium polyphosphate and tricresyl phosphate, aluminum hydroxide, magnesium hydroxide, and thermally expansive graphite. The above-mentioned flame retardant may be used alone or two or more of them may be used in combination.

The flame retardant is used in a range from 5 to 200 parts by weight and more preferably from 10 to 100 parts by weight per 100 parts by weight of the total of the components (A) and (B).

The curable composition of the invention may contain various kinds of additives for adjusting the various physical properties of the curable composition or the cured product of the composition according to need. Examples of the additives are a curability adjustment agent, a radical inhibitor, a metal inactivation agent, an ozone deterioration-preventing agent, a phosphorus-type peroxide decomposing agent, a lubricant, a pigment, a foaming agent, a repellent for ants, anti-fungal agent. These various additives may be used alone or two or more of them may be used in combination. Specific examples other than the examples of the additives described in this specification are described in Japanese Kokoku Publication Hei-4-69659, Japanese Kokoku Publication Hei-7-108928, Japanese Kokai Publication Sho-63-254149, Japanese Kokai Publication Sho-64-22904, Japanese Kokai Publication 2001-72854.

In the case where the one package curable composition of the invention is prepared, since all of the components are previously mixed, it is preferable to previously dehydrate and dry the components containing water prior to use or to carry out dehydration by vacuum etc. during the components are kneaded. In the case where the composition is a powder solid, the dehydration and drying method is preferably heat drying and in the case where it is liquid, vacuum dehydration or dehydration using a synthetic zeolite, activated alumina, silica gel, burnt lime, magnesium oxide is preferable. Alternatively, a small amount of an isocyanate compound may be added to cause reaction of the isocyanate group and water for dehydration. Further, an oxazolidine compound such as 3-ethyl-2-methyl-2-(3-methylbutyl)-1,3-oxazolidine may be added to cause reaction with water for dehydration. In addition to the above-mentioned dehydration and drying methods, the storage stability is further improved by adding a lower alcohol such as methanol and ethanol; and an alkoxysilane such as n-propyltrimethoxysilane, vinyltrimethoxysilane, vinylmethyldimethoxysilane, methyl silicate, ethyl silicate, γ-mercaptopropylmethyldimethoxysilane, γ-mercaptopropylmethyldiethoxysilane, and γ-glycidoxypropyltrimethoxysilane.

The use amount of a dehydration agent, particularly a silicon compound reactive with water such as vinyltrimethoxysilane is preferably in a range from 0.1 to 20 parts by weight and more preferably from 0.5 to 10 parts by weight per 100 parts by weight of the organic polymer (A) having a reactive silicon group.

A specific preparation method may be a method involving mixing (A) the organic polymer having a silicon-containing group capable of crosslinking by forming a siloxane bond, (B) the carboxylic acid and/or metal carboxylate, (C) the surface-treated ground calcium carbonate and other additives by a mixer, a roll, a kneader; carrying out dehydration such as thermal vacuum dehydration for completely removing water; and storing a one package curable composition with a water content decreased to a level low enough for practical use in a moisture-proof closed container.

The one package curable composition of the invention obtained in the above-mentioned manner does not cure during the storage and forms three-dimensional mesh structure while being taken out of the container and exposed to moisture in the air and thus cures quickly from the surface to be a cured solid having rubber-like elasticity.

The curable composition of the invention is usable for pressure sensitive adhesives, sealants for buildings and constructions, ships, automobiles and roads etc., adhesives, framing agents, materials for vibration absorption, materials for vibration suppression, materials for noise reduction, foamed materials, paints, spraying materials. The curable composition of the invention is more preferable to be used as sealants or adhesives among them since the cured product obtained by curing the composition is excellent in flexibility and adhesiveness.

Further, the curable composition is usable for various uses, for example electric and electronic parts such as sealants for rear faces of solar cells; insulating materials such as insulating coating materials for electric wires and cables; elastic adhesives, contact adhesives, spraying sealants, crack repairing materials, adhesives for tiles, powdery coating materials, casting materials, rubber materials for medical use, pressure sensitive adhesives for medical use, sealants for medical appliances, packaging materials for food, joint sealants for exterior materials such as a siding board, coating materials, primers, conductive materials for shielding electromagnetic wave, heat conductive materials, hot melt materials, electric and electronic potting agents, films, gaskets, various kinds of molding materials, rustproof and waterproof sealants for end faces (cut sections) of net glass or laminated glass, liquid sealants used in automobile parts, electric parts, various kinds of machine parts. Further, since the curable composition can be closely stuck to a wide range of substrates such as glass, ceramics, wood, metals, and resin molded products by itself or with assist of a primer, it is also usable as various types of hermetically sealing compositions and adhesive compositions. Since the curable composition of the invention is excellent in the restorability, durability, and creep resistance, the curable composition is particularly preferred as adhesives for interior panels, adhesives for exterior panels, adhesives for tiles, adhesives for stone material lining, adhesives for ceiling finishing, adhesives for floor finishing, adhesives for wall finishing, adhesives for vehicle panels, adhesives for assembly of electric apparatus/electronic apparatus/precision apparatus, sealants for direct grading, sealants for laminate glass, sealants for SSG process, sealants for working joints of buildings and constructions.

### BEST MODE FOR CARRYING OUT THE INVENTION

Next, the invention will be described more in detail with reference to Examples and Comparative Examples, however the invention should not be limited to these examples.

### (Synthesis Example 1)

Using a mixture of polyoxypropylene diol with a molecular weight of about 2,000 and polyoxypropylene triol with a molecular weight of about 3,000 at 1/1 in weight ratio as an initiator, propylene oxide was polymerized by a zinc hexacyanocobaltate glyme complex catalyst to obtain polypropylene oxide with a number average molecular weight of about 19,000 (measured by using HLC-8120 GPC manufactured by Tosoh Corporation as a solution transporting system; TSK-GEL H column manufactured by Tosoh Corporation as a column; and THF as a solvent: the molecular weight was determined on the basis of conversion into polystyrene). Successively, the terminal hydroxyl groups of the hydroxyl-terminated polypropylene oxide were converted into allyl groups by adding a methanol solution of NaOMe in 1.2 times much equivalent to the hydroxyl groups, removing methanol, and then adding allyl chloride. Accordingly, propylene oxide with a number average molecular weight of about 19,000 and terminated with allyl groups was obtained.

After 300 parts by weight of n-hexane and 300 parts by weight of water were added to and mixed, with stirring, with 100 parts by weight of the crude allyl-terminated polypropylene oxide thus obtained, water was removed by centrifugation. Then, 300 parts by weight of water was added to the obtained hexane solution with stirring, water was removed again by centrifugation and successively, hexane was removed by vacuum evaporation in order to obtain a purified allyl-terminated polypropylene oxide (hereinafter, referred to as an allyl polymer). Using 150 ppm of an isopropanol solution of a platinum-vinylsiloxane complex with 3% by weight of platinum content as a catalyst, 100 parts by weight of the obtained allyl polymer was reacted with 1.35 parts by weight of methyldimethoxysilane at 90°C for 5 hours to obtain a methyldimethoxysilyl-terminated polypropylene oxide (A-1). It was found by ¹H-NMR measurement (measured by using NM-LA 400 manufactured by Nippon Electric Co., Ltd., and in CDCl₃ solvent) that there were about 1.7 terminal methyldimethoxysilyl groups on average per one molecule.

### (Examples 1 to 3, and Comparative Example 1)

The reactive silicon group-containing polyoxyalkylene polymer (A-1) obtained in Synthesis Example 1 was used as the component (A) and a filler, titanium oxide, a plasticizer, an antisagging agent, an ultraviolet absorber, a light stabilizer, a dehydration agent, an adhesion promoter, and the component (B) and the component (D) (as a curing catalyst) were respectively weighed according to the formulation shown in Table 1. These components were mixed together using a mixer to produce a one package curable composition. The composition was then enclosed in an aluminum cartridge.

Each curable composition was extruded out of the cartridge and filled into a mold with a thickness of about 5 mm using a spatula, and then the surface of the composition was leveled to be flat. This moment was defined as the curing starting time. The surface was touched with the spatula every one minute and the moment when the mixture was not stuck to the spatula any more was determined as the skin formation time.

Each curable composition was filled into a sheet-like mold with a thickness of 3 mm and the surface of the composition was leveled. Then, after aging for 3 days at 23°C and further 4 days at 50°C, dumbbell form specimens were produced by punching out the cured products using a dumbbell-like mold. The produced dumbbell form specimens were subjected to a tensile test at 200 mm/min pulling speed to determine M50:50% tensile modulus (MPa).

Each curable composition was extruded as to be closely applied to the respective adherends (an anodized aluminum, a polyvinyl chloride-coated steel plate, a hard polyvinyl chloride, and an aluminum-magnesium-manganese alloy), aged at 23°C for 7 days and then subjected to a 90 degree-hand peeling test. The broken state of the respective cured products was observed to determine cohesive failure ratio (CF ratio). A is marked if CF ratio was 95% or higher; B if CF ratio was 50% or higher and lower than 95%; C if CF ratio was 10% or higher and lower than 50%; and D if CF ratio was lower than 10%.

The evaluation results of the respective specimens are shown in Table 1.

**Table 1**

| Composition (parts by weight) | | | | Example | | | Comparative Example |
|---|---|---|---|---|---|---|---|
| | | | | 1 | 2 | 3 | 1 |
| Organic Polymer(A) | | A-1 | | 100 | 100 | 100 | 100 |
| Filler | Component (C) | Carbital 110S⁽¹⁾ | IMERYS | 200 | 200 | 200 | |
| | | Winnofil SPM⁽²⁾ | SOLVAY | | | | 120 |
| Titanium oxide | | RFK-2 | KERR-McGEE | 10 | 10 | 10 | 10 |
| Plasticizer | | DIDP⁽³⁾ | KYOWA HAKKO KOGYO Co., Ltd. | 50 | | 70 | 50 |
| | | Actcol P23⁽⁴⁾ | Takeda Pharmaceutical Company Limited | | 50 | | |
| Antisagging agent | | Crayvallac Super⁽⁵⁾ | CRAY VALLEY | 10 | 10 | 20 | 10 |
| Ultraviolet absorber | | TINUVIN 327⁽⁶⁾ | Ciba Specialty Chemicals | 1 | 1 | 1 | 1 |
| Light stabilizer | | Sanol LS-170⁽⁷⁾ | Sankyo Co., Ltd. | 1 | 1 | 1 | 1 |
| Dehydration agent | | A-171⁽⁸⁾ | Nippon Unicar Company Limited | 2 | 2 | 2 | 2 |
| Adhesion promoter | | A-1120⁽⁹⁾ | Nippon Unicar Company Limited | 5 | 5 | 3 | 5 |
| Crosslinking agent | | Methyl silicate 51⁽¹⁰⁾ | COLCOAT CO..Ltd | 2 | 2 | | 2 |
| Metal carboxylate (b2) | | Neostann U-50⁽¹¹⁾ | Nitto Kasei Co.. Ltd. | 3.4 | 3.4 | | 3.4 |
| Carboxylic acid (b1) | | Versatic 10⁽¹²⁾ | Japan Epoxy Resin Co., Ltd. | 0.5 | 0.5 | 7.5 | 0.5 |
| Adhesiveness | | DEAPA⁽¹³⁾ | Wako Pure Chemical Industries, Ltd. | 0.5 | 0.5 | | 0.5 |
| | | Farmin D86⁽¹⁴⁾ | Kao Corporation | | | 6 | |
| Curability | | Skin formation time | (min) | 82 | 74 | 75 | 72 |
| Dumbbell physical property | | 50% tensile modulus | (MPa) | 0.81 | 0.82 | 0.58 | 0.83 |
| Adhesiveness | | 90 degree-hand peeling | Anodized aluminum | A | A | B | A |
| | | | Polyvinyl chloride-coated steel plate | A | A | B | 8 |
| | | | Hard polyvinyl chloride | B | A | B | B |
| | | | Aluminum-magnesium- manganese alloy | A | A | No data | C |

| | | | | | | | |
|---|---|---|---|---|---|---|---|
| (1): Surface-treated ground calcium carbonate (2): Colloidal calcium carbonate (3): Diisodecyl phthalate (4): PPG3000 (5): Amide wax (6): 2-(3,5-di-tert-butyl-2-hydroxyphenyl)-5-chlorobenzotriazole (7): Bis(2,2,6,6-tetramethyl-4-piperidyl)sebacate (8): Trimethoxyvinylsilane (9): H₂NC₂H₄NHC₃H₆Si (OMe)₃ (10): Tetramethoxysilane condensate (Si content: 51%) (11): Tin (II) neodecanoate (metal (Sn) content: 22 to 24%) (12): Neodecanoic acid (13): 3-diethylaminopropylamine (14): Distearylamine | | | | | | | |

As shown in Table 1, curable compositions having practically applicable curability and adhesiveness were obtained by using the carboxylic acid (b1)whose carbon atom adjacent to a carbonyl group is a quaternary carbon and/or (b2) the tin carboxylate, whose carbon atom adjacent to a carbonyl group is a quaternary carbon as the curing catalyst and using the surface-treated ground calcium carbonate as the filler (C). On the other hand, as shown in Comparative Example 1, in the case where a colloidal calcium carbonate was used as the filler, the adhesiveness to several adherends was insufficient. The addition amounts of the respective fillers were adjusted so as to keep M50 value close to each other in Comparative Example 1 and Example 1.

### (Examples 4 to 8 and Comparative Examples 2 and 3)

The reactive silicon group-containing polyoxyalkylene polymer (A-1) obtained in Synthesis Example 1 was used as the component (A) and a filler, titanium oxide, a plasticizer, an antisagging agent, an ultraviolet absorber, a light stabilizer, a dehydration agent, an adhesion promoter, a crosslinking agent, and the component (b2) and component (D) (as a curing catalyst) were respectively weighed according to the formulation shown in Table 2. These components were mixed together using a mixer to produce a one package curable composition. The composition was then enclosed in an aluminum cartridge.

Curability and adhesiveness (an anodized aluminum, a hard polyvinyl chloride, an aluminum-magnesium alloy, and an aluminum-copper-magnesium alloy) were evaluated as in the above-mentioned manner.

The results are shown in Table 2.

**Table 2**

| Composition (parts by weight) | | | | Example | | | | | Comparative Example | |
|---|---|---|---|---|---|---|---|---|---|---|
| | | | | 4 | 5 | 6 | 7 | 8 | 2 | 3 |
| Organic Polymer(A) | | A-1 | | 100 | 100 | 100 | 100 | 100 | 100 | 100 |
| Filler | Component (C) | Carbital 110S⁽¹⁾ | IMERYS | 200 | | | | 100 | | |
| | | LITON A⁽¹⁾ | SHIRAISHI CALSIUM KAISHA, LTD. | | 200 | | | | | |
| | | P0320B10⁽¹⁾ | SHIRAISHI CALSIUM KAISHA, LTD. | | | 200 | | | | |
| | | M300⁽¹⁾ | Maruo Calcium Co. | | | | 200 | | | |
| | | SOFTON 3200⁽²⁾ | SHIRAISHI CALSIUM KAISHA, LTD. | | | | | | 200 | |
| | | Winnofil SPM⁽³⁾ | SOLVAY | | | | | 60 | | 120 |
| Titanium oxide | | RFK-2 | KERR-McGEE | 10 | 20 | 20 | 20 | 20 | 20 | 20 |
| Plasticizer | | Actcol P23⁽⁴⁾ | Takeda Pharmaceutical Company Limited | 30 | 30 | 30 | 30 | 30 | 30 | 30 |
| Antisagging agent | | Crayvallac Super⁽⁵⁾ | CRAY VALLEY | 5 | 5 | 5 | 5 | 5 | 5 | 2 |
| Ultraviolet absorber | | TINUVIN 327⁽⁶⁾ | Ciba Specialty Chemicals | 1 | 1 | 1 | 1 | 1 | 1 | 1 |
| Light stabilizer | | Sanol LS-770⁽⁷⁾ | Sankyo Co., Ltd. | 1 | 1 | 1 | 1 | 1 | 1 | 1 |
| Dehydration agent | | A-171⁽⁸⁾ | Nippon Unicar Company Limited | 2 | 2 | 2 | 2 | 2 | 2 | 2 |
| Adhesion promoter | | A-1120⁽⁹⁾ | Nippon Unicar Company Limited | 5 | 5 | 5 | 5 | 5 | 5 | 5 |
| Adhesiveness | | Methyl silicate 51⁽¹⁰⁾ | COLCOAT CO.,Ltd | 2 | 2 | 2 | 2 | 2 | 2 | 2 |
| Metal carboxylate (b2) | | Neostann U-50⁽¹¹⁾ | Nitto Kasei Co., Ltd. | 3.4 | 3.4 | 3.4 | 3.4 | 3.4 | 3.4 | 3.4 |
| Amine compound(D) | | DEAPA⁽¹²⁾ | Wako Pure Chemical Industries, Ltd. | 0.5 | 0.5 | 0.5 | 0.5 | 0.5 | 0.5 | 0.5 |
| Curability | | Skin formation time | (min) | 68 | 74 | 70 | 71 | 71 | 68 | 89 |
| Adhesiveness | | 90 degree-hand peeling | Anodized aluminum | A | A | A | A | A | A | A |
| | | | Polyvinyl chloride-coated steel plate | A | A | B | A | A | C | B |
| | | | Aluminum-magnesium alloy | B | B | C | C | B | D | D |
| | | | Aluminum-copper-magnesium alloy | A | A | A | A | A | A | B |

| | | | | | | | | | | |
|---|---|---|---|---|---|---|---|---|---|---|
| (1): Surface-treated ground calcium carbonate (2): Untreated ground calcium carbonate (3): Colloidal calcium carbonate (4): PPG3000 (5): Amide wax (6): 2-(3,5-di-tert-butyl-2-hydroxyphenyl)-5-chlorobenzotriazole (7): Bis(2,2,6,6-tetramethyl-4-piperidyl)sebacate (8): Trimethoxyvinylsilane (9) : H₂NC₂H₄NHC₃H₆Si (OMe)₃ (10): Tetramethoxysilane condensate (Si content: 51%) (11): Tin (II) neodecanoate (metal (Sn) content: 22 to 24%) (12): 3-diethylaminopropylamine | | | | | | | | | | |

As shown in Table 2, curable compositions capable of providing cured products with practically applicable curability and good adhesiveness were obtained by using the tin carboxylate, whose carbon atom adjacent to a carbonyl group is a quaternary carbon as the curing catalyst and using the surface-treated ground calcium carbonate as the filler (C) . On the other hand, as shown in Comparative Example 3, in the case of the curable composition containing a colloidal calcium carbonate alone as the filler, the composition was insufficient in the adhesiveness to several adherends. Further, in the case of using untreated ground calcium carbonate as the filler, no sufficient adhesiveness was obtained.

### (Example 9 and Comparative Example 4)

The reactive silicon group-containing polyoxyalkylene polymer (A-1) obtained in Synthesis Example 1 was used as the component (A) and a filler (C), titanium oxide, a plasticizer, an antisagging agent, an ultraviolet absorber, a light stabilizer, a dehydration agent, an adhesion promoter, a crosslinking agent, the metal carboxylate (as a curing catalyst) and the amine compound component (D) were respectively weighed according to the formulation shown in Table 3. These components were mixed together using a mixer to produce a one package curable composition. The composition was then enclosed in an aluminum cartridge.

Curability and adhesiveness (an anodized aluminum, an aluminum-magnesium alloy, an aluminum-copper-magnesium alloy, and a zinc steel plate) were evaluated as in the above-mentioned manner.

The results are shown in Table 3.

**Table 3**

| Composition (parts by weight) | | | | Example | Comparative Example |
|---|---|---|---|---|---|
| | | | | 9 | 4 |
| Organic Polymer(A) | | A-1 | | 100 | 100 |
| Filler(C) | | Carbital 110S(1) | IMERYS | 200 | 200 |
| Titanium oxide | | RFK-2 | KERR-McGEE | 10 | 10 |
| Plasticizer | | Actcol P23⁽²⁾ | Takeda Pharmaceutical Company Limited | 30 | 30 |
| Antisagging agent | | Crayvallac Super⁽³⁾ | CRAY VALLEY | 5 | 2 |
| Ultraviolet absorber | | TINUVIN 327⁽⁴⁾ | Ciba Specialty Chemicals | 1 | 1 |
| Light stabilizer | | Sanol LS-770⁽⁵⁾ | Sankyo Co., Ltd. | 1 | 1 |
| Dehydration agent | | A-171⁽⁶⁾ | Nippon Unicar Company Limited | 2 | 2 |
| Adhesion promoter | | A-1120⁽⁷⁾ | Nippon Unicar Company Limited | 5 | 5 |
| Crosslinking agent | | Methyl silicate 51⁽⁸⁾ | COLCOAT CO.,Ltd | 2 | 2 |
| | Component (b2) | Neostann U-50⁽⁹⁾ | Nitto Kasei Co., Ltd. | 3 | |
| Metal carboxylate | | Neostann U-28⁽¹⁰⁾ | Nitto Kasei Co., Ltd. | | 3 |
| Amine compound(D) | | DEAPA⁽¹¹⁾ | Wako Pure Chemical Industries, Ltd. | 0.5 | 0.5 |
| Curability | | Skin formation time | (min) | 100 | 190 |
| Adhesiveness | | 90 degree-hand peeling | Anodized aluminum | A | B |
| | | | Aluminum-magnesium alloy | A | B |
| | | | Aluminum-copper-magnesium alloy | A | B |
| | | | Zinc steel plate | B | C |

| | | | | | |
|---|---|---|---|---|---|
| (1): Surface-treated ground calcium carbonate (2): PPG3000 (3): Amide wax (4): 2-(3,5-di-tert-butyl-2-hydroxyphenyl)-5-chlorobenzotriazole (5): Bis(2,2,6,6-tetramethyl-4-piperidyl)sebacate (6): Trimethoxyvinylsilane (7): H₂NC₂H₄NHC₃H₆Si (OMe)₃ (8): Tetramethoxysilane condensate (Si content: 51%) (9): Tin (II) neodecanoate (metal (Sn) content: 22 to 24%) (10): Tin (II) 2-ethylhexanoate (metal (Sn) content: 28%) (11): 3-diethylaminopropylamine | | | | | |

As shown in Table 3, better curability and adhesiveness were obtained in the case of using the tin carboxylate (b2) whose the carbon atom adjacent to a carbonyl group is a quaternary carbon as the curing catalyst than in the case of using the tin carboxylate of which the carbon atom adjacent to a carbonyl group is a tertiary carbon.

## Claims

1. A one package curable composition
which comprises
(A) an organic polymer having a silicon-containing group capable of crosslinking by forming a siloxane bond,
(B) (b1) a carboxylic acid, whose carbon atom adjacent to a carbonyl group is a quaternary carbon, and/or (b2) a tin carboxylate, whose carbon atom adjacent to a carbonyl group is a quaternary carbon, and
(C) a surface-treated ground calcium carbonate.

2. The one package curable composition according to Claim 1
wherein the organic polymer of the component (A) has a number average molecular weight in a range from 500 to 100,000 and contains, on average, one or more silicon-containing group represented by the general formula (1) at a terminus of a main chain and/or a side chain per one molecule: 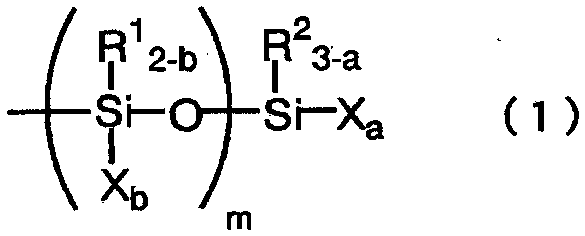
(wherein R¹ and R² independently denote an alkyl group having 1 to 20 carbon atoms, an aryl group having 6 to 20 carbon atoms, an aralkyl group having 7 to 20 carbon atoms, or a triorganosiloxy group defined as (R')₃SiO- (respective substituents R' are independently a substituted or unsubstituted hydrocarbon group having 1 to 20 carbon atoms) ; respective substituents X independently denote a hydroxyl or hydrolysable group; (a) denotes 0, 1, 2, or 3 and (b) denotes 0, 1, or 2 except the case both (a) and (b) are 0; and (m) denotes 0 or an integer of 1 to 19).

3. The one package curable composition according to Claim 2
wherein X is an alkoxy group.

4. The one package curable composition according to any one of Claims 1 to 3
wherein the organic polymer of the component (A) is one or more polymers selected from the group consisting of a polyoxyalkylene polymer, a saturated hydrocarbon polymer, and a (meth)acrylic ester polymer.

5. The one package curable composition according to Claim 4
wherein the polyoxyalkylene polymer is a polyoxypropylene polymer.

6. The one package curable composition according to any one of Claims 1 to 5
which comprises, as the component (B), (b1) a carboxylic acid, whose carbon atom adjacent to a carbonyl group is a quaternary carbon, and (b2) a tin carboxylate, whose carbon atom adjacent to a carbonyl group is a quaternary carbon.

7. The one package curable composition according to any one of Claims 1 to 5
which comprises, as the component (B), (b1) a carboxylic acid, whose carbon atom adjacent to a carbonyl group is a quaternary carbon, or (b2) a tin carboxylate, whose carbon atom adjacent to a carbonyl, group is a quaternary carbon.

8. The one package curable composition according to Claim 7
wherein the component (B) is the tin carboxylate, whose carbon atom adjacent to a carbonyl group is a quaternary carbon.

9. The one package curable composition according to any one of Claims 1 to 8
which further comprises an amine compound as the component (D).

## Patentansprüche

1. Härtbare Einkomponenten-Zusammensetzung, die umfasst:
(A) ein organisches Polymer, das eine Silicium-haltige Gruppe aufweist, die durch Ausbilden einer Siloxanbindung quervernetzen kann,
(B) (b1) eine Carboxylsäure, deren Kohlenstoffatom, das benachbart zu einer Carbonylgruppe ist, ein quaternärer Kohlenstoff ist, und/oder (b2) ein Zinncarboxylat, dessen Kohlenstoffatom, das benachbart zu einer Carbonylgruppe ist, ein quaternärer Kohlenstoff ist, und
(C) ein oberflächenbehandeltes gemahlenes Calciumcarbonat.

2. Härtbare Einkomponenten-Zusammensetzung nach Anspruch 1, wobei das organische Polymer der Komponenten (A) ein Zahlenmittel des Molekulargewichts in einem Bereich von 500 bis 100.000 aufweist und durchschnittlich eine oder mehrere Silicium-haltige Gruppe(n), die durch die allgemeine Formel (1) dargestellt wird/werden, an einem Terminus der Hauptkette und/oder einer Seitenkette pro Molekül enthält: 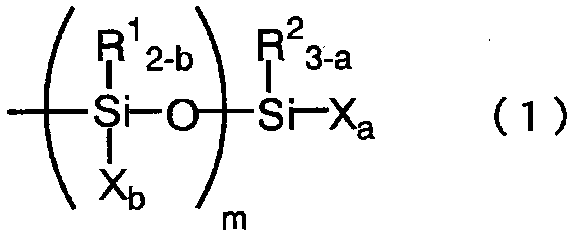
(wobei R¹ und R² unabhängig voneinander eine Alkylgruppe mit 1 bis 20 Kohlenstoffatomen, eine Arylgruppe mit 6 bis 20 Kohlenstoffatomen, eine Aralkylgruppe mit 7 bis 20 Kohlenstoffatomen oder eine als (R')₃SiO- definierte Triorganosiloxylgruppe (die jeweiligen Substituenten R' stellen unabhängig eine substituierte oder unsubstituierte Kohlenwasserstoffgruppe mit 1 bis 20 Kohlenstoffatomen dar) bezeichnen, jeweilige Substituenten X unabhängig eine Hydroxyl- oder eine hydrolysierbare Gruppe darstellen, (a) 0, 1, 2 oder 3 ist und (b) 0, 1 oder 2 ist, abgesehen von dem Fall, dass (a) und (b) 0 sind, und (m) 0 oder eine ganze Zahl von 1 bis 19 ist).

3. Härtbare Einkomponenten-Zusammensetzung nach Anspruch 2, wobei X eine Alkoxygruppe ist.

4. Härtbare Einkomponenten-Zusammensetzung nach einem der Ansprüche 1 bis 3, wobei das organische Polymer der Komponente (A) ein oder mehrere Polymer(e) ist, das/die aus der aus einem Polyoxyalkylenpolymer, einem gesättigten Kohlenwasserstoffpolymer und einem (Meth)acrylesterpolymer bestehenden Gruppe ausgewählt ist/sind.

5. Härtbare Einkomponenten-Zusammensetzung nach Anspruch 4, wobei das Polyoxyalkylenpolymer ein Polyoxypropylenpolymer ist.

6. Härtbare Einkomponenten-Zusammensetzung nach einem der Ansprüche 1 bis 5, das als die Komponente (B) (b1) eine Carboxylsäure, deren Kohlenstoffatom, das benachbart zu einer Carbonylgruppe ist, ein quaternärer Kohlenstoff ist, und (b2) ein Zinncarboxylat, dessen Kohlenstoffatom, das benachbart zu einer Carbonylgruppe ist, ein quaternärer Kohlenstoff ist, umfasst.

7. Härtbare Einkomponenten-Zusammensetzung nach einem der Ansprüche 1 bis 5, das als die Komponente (B) (b1) eine Carboxylsäure, deren Kohlenstoffatom, das benachbart zu einer Carbonylgruppe ist, ein quaternärer Kohlenstoff ist, oder (b2) ein Zinncarboxylat, dessen Kohlenstoffatom, das benachbart zu einer Carbonylgruppe ist, ein quaternärer Kohlenstoff ist, umfasst.

8. Härtbare Einkomponenten-Zusammensetzung nach Anspruch 7, wobei die Komponente (B) das Zinncarboxylat ist, dessen Kohlenstoffatom, das benachbart zu einer Carbonylgruppe ist, ein quaternärer Kohlenstoff ist.

9. Härtbare Einkomponenten-Zusammensetzung nach einem der Ansprüche 1 bis 8, das ferner eine Aminverbindung als Komponente (D) umfasst.

## Revendications

1. Composition durcissable à un composant qui comprend
(A) un polymère organique ayant un groupe contenant du silicium capable de réticulation par formation d'une liaison siloxane,
(B) (b1) un acide carboxylique dont l'atome de carbone adjacent à un groupe carbonyle est un carbone quaternaire, et/ou (b2) un carboxylate d'étain dont l'atome de carbone adjacent à un groupe carbonyle est un carbone quaternaire, et
(C) un carbonate de calcium broyé traité en surface.

2. Composition durcissable à un composant selon la revendication 1
où le polymère organique du composant (A) a une masse moléculaire moyenne en nombre dans une plage de 500 à 100 000 et contient, en moyenne, un ou plusieurs groupes contenant du silicium représentés par la formule générale (1) à une extrémité d'une chaîne principale et/ou d'une chaîne latérale par molécule : 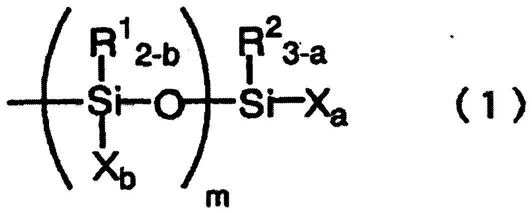
(où R¹ et R² représentent indépendamment un groupe alkyle ayant 1 à 20 atomes de carbone, un groupe aryle ayant 6 à 20 atomes de carbone, un groupe aralkyle ayant 7 à 20 atomes de carbone ou un groupe triorganosiloxy défini comme étant (R')₃SiO- (les substituants R' respectifs sont indépendamment un groupe hydrocarboné substitué ou non substitué ayant 1 à 20 atomes de carbone) ; les substituants X respectifs représentent indépendamment un groupe hydroxyle ou hydrolysable ; (a) représente 0, 1, 2 ou 3 et (b) représente 0, 1 ou 2 à l'exception du cas où (a) et (b) sont l'un et l'autre 0 ; et (m) représente 0 ou un entier de 1 à 19).

3. Composition durcissable à un composant selon la revendication 2
où X est un groupe alcoxy.

4. Composition durcissable à un composant selon l'une quelconque des revendications 1 à 3
où le polymère organique du composant (A) est un ou plusieurs polymères choisis dans le groupe consistant en un polymère de polyoxyalkylène, un polymère hydrocarboné saturé et un polymère d'ester (méth)acrylique.

5. Composition durcissable à un composant selon la revendication 4
où le polymère de polyoxyalkylène est un polymère de polyoxypropylène.

6. Composition durcissable à un composant selon l'une quelconque des revendications 1 à 5
qui comprend, comme composant (B), (b1) un acide carboxylique dont l'atome de carbone adjacent à un groupe carbonyle est un carbone quaternaire et (b2) un carboxylate d'étain dont l'atome de carbone adjacent à un groupe carbonyle est un carbone quaternaire.

7. Composition durcissable à un composant selon l'une quelconque des revendications 1 à 5
qui comprend, comme composant (B), (b1) un acide carboxylique dont l'atome de carbone adjacent à un groupe carbonyle est un carbone quaternaire ou (b2) un carboxylate d'étain dont l'atome de carbone adjacent à un groupe carbonyle est un carbone quaternaire.

8. Composition durcissable à un composant selon la revendication 7
où le composant (B) est le carboxylate d'étain dont l'atome de carbone adjacent à un groupe carbonyle est un carbone quaternaire.

9. Composition durcissable à un composant selon l'une quelconque des revendications 1 à 8
qui comprend en outre un composé amine comme composant (D).
